**Europäisches Patentamt**

**European Patent Office**

**Office européen des brevets**

(11) Publication number : **0 478 351 A2**

# EUROPEAN PATENT APPLICATION

(21) Application number : **91308833.2**

(51) Int. Cl.⁵ : **G03G 15/00**

(22) Date of filing : **27.09.91**

(30) Priority : **28.09.90 US 589607**

(43) Date of publication of application :
**01.04.92 Bulletin 92/14**

(84) Designated Contracting States :
**DE FR GB**

(71) Applicant : **XEROX CORPORATION**
**Xerox Square**
**Rochester New York 14644 (US)**

(72) Inventor : **Krist, Peter M.**
**52 Applewood Drive**
**Rochester, New York, 14612 (US)**
Inventor : **Rourke, John L.**
**94 Waterford Way**
**Fairport, New York, 14450 (US)**
Inventor : **Barrett, Michael**
**3240 Winton Road South, Apt F22**
**Rochester, New York, 14623 (US)**

(74) Representative : **Hill, Cecilia Ann et al**
**Rank Xerox Patent Department Albion House,**
**55 New Oxford Street**
**London WC1A 1BS (GB)**

(54) **Page number generation and formatting in electronic reprographic/printing products.**

(57)    A page numbering system in an electronic reprographic printing system generates page numbers and formats. The page numbering system not only aids in page identification and position verification in the printing process, but additionally allows for programming the page numbering format to vary the page number position on the printed page, and for skipping of nondocument pages. The electronic reprographic printing system also includes a user interface such as a touch screen, keyboard or mouse for allowing the system operator to program parameters of the page numberings into the reprographic system. Default parameters are specified when the system operator fails to input particular page numbering parameters.

EP 0 478 351 A2

The present invention relates to a system for automatic page number generation and formatting in electronic reprographic printing products. In particular, the present invention relates to a page numbering system that not only aids page identification and position verification in the printing process, but additionally allows for selectively altering the page numbering format to skip non-document pages, and to vary page number output when the pages are bound.

## 2. Description of the Related Art

The current page numbering benchmark is in Light/Lens reprographic systems, and is implemented with an array of LEDs known as Sullivan's Page Numbering Device. Such a system enables a page number to be placed on printed output documents in one location and orientation. The current system is essentially a page counter that counts the number of pages printed during a print job.

The related art has disclosed printing systems which allow for page number generation on a printed output product.

U.S. Patent No. 4,539,653 to Bartlett et al. discloses a text composition and formatting control for use within a text processing system that automatically generates and writes page numbers into user-specified locations on a document image.

U. S. Patent No. 4,845,525 to Ito discloses a control feature for a copying machine which allows a user to generate and then write a page number into a specified data location on a digital image while in a duplex copy mode.

While the related art recognizes page numbering, it does not provide the flexibility of a programmable system that allows for varying such parameters as page number locations, orientations and font sizes according to the operator's specification (or a preprogrammed default) in a manner disclosed herein, nor the automatic skipping of page numbering of certain nondocument pages

Page numbering of the output product of electronic reprographic printing systems is desirable. Page numbering is especially useful when a document is assembled at duplication time from several blocks of originals, each block produced (and possibly numbered) by a different source. In addition, operators in central reproduction offices often need to identify and verify pages by their numerical position within a document when they proof the document prior to a production run The numerical position of the pages may or may not correspond to the prenumbered originals, or the originals may not be prenumbered. Current page numbering systems, however, do not allow for a flexible application wherein the consecutively numbered printed product is of the necessary format and quality such that it can be immediately bound. Though the exact location and orientation of the page numbers is often not important for page identification or position verification during proofing, for document quality applications where the final product is a bound volume or the like, the position and appearance of the page numbers can be very important.

A page numbering system is needed that allows the operator to selectively set specifications such as the page number location and page number orientation (0°, 90°, 180°, 270°) on the output page, page number font size, initial page number, and the initial page in the document for the commencement of the page numbering. A page numbering system is also needed which can automatically distinguish nondocument pages (such as inserts, slip sheets and blank pages) from document pages so that only document pages (i.e., printed pages forming the final document) are numbered.

The present invention provides a method for operating an electronic reprographic system comprising the steps of

scanning a set of original documents which comprise a job to be printed;

electronically storing in memory images of the scanned documents;

converting the images to electronic pages for printing;

inputting at least one print mode parameter to obtain printed pages printed in accordance with the print mode parameter and corresponding to the electronic pages and

selectively generating consecutive page numbers each in a predetermined position for selected electronic pages in response to said print mode parameter..

The page number generation step may include the step of skipping predetermined electronic pages in response to a print mode parameter specifying a location of the predetermined electronic pages.

A method in accordance with the invention may further comprise a default step of locating a page number in the predetermined position in the absence of a print mode parameter specifying the predetermined position.

In a method in accordance with the invention, the at least one print mode parameter may include a mirror image active mode and a mirror image inactive mode, the mirror image inactive mode locating page numbers in the same predetermined location for consecutive numbered printed pages, the mirror image active mode locating page numbers in predetermined mirror image location for consecutively numbered pages. The print mode parameter may include a top print mode and a bottom print mode for locating a page number adjacent a head and toe, respectively, of a printed page.

The print mode parameter may be a bound page mode, and the pre-selected position may be one of a first location adjacent a bound edge and a second location away from the bound edge.

In a method in accordance with the invention, the generation of page numbers may begin with a preselected page number.

A method in accordance with the invention may further comprise the step of displaying an electronic page with a corresponding page number to a system operator.

The step of inputting a print mode parameter may include selecting an edge of the printed page for the page number location. More particularly, the step of inputting a print mode parameter may include selecting a position along an edge of the printed page for the page number location. Alternatively, the step of inputting a print mode parameter may include selecting a distance from an edge of the printed page for the location of the page number.

In one form of the invention, the print mode parameter specifies the plex of the printed pages, and the page numbers are generated in pre-selected locations in response to the plex. If the print mode is simplex, page numbers are generated on one printed side of the page. If the print mode is duplex, page numbers are generated on both printed sides of the page. If the print mode is signature, page numbers are generated in sequential order corresponding to an order in which the original document are scanned. In a particular example of the latter, the printed page includes two frames, and a page number is generated for each frame.

In accordance with another aspect of the present invention, there is provided a method for page numbering in an electronic reprographic system comprising the steps of:

creating a set of electronic page images which comprises a job to be printed;

storing the electronic page images in memory;

selectively generating page numbers for the stored electronic page images;

determining the location and orientation for the page numbers within corresponding electronic page images; and

converting the electronic page images and page numbers to printed pages..

A method in accordance with this aspect of the invention may further comprise the step of determining the font point size of the page numbers. Alternatively or in addition, a method in accordance with this aspect of the invention may further comprise the step of selecting a first page number and a first electronic page for the selective page number generation. Alternatively or in addition, a method in accordance with this aspect of the invention may further comprise the step of selecting at least one electronic page image to be skipped during the page number generation.

The present invention further provides an electronic reprographic system comprising:

means for scanning a set of original documents which comprise a job to be printed;

means for electronically storing in memory images of the scanned documents;

means for converting the images to electronic pages for printing;

means for inputting at least one print mode parameter to obtain printed pages printed in accordance with the print mode parameter and corresponding to the electronic pages; and means for selectively generating consecutive page numbers each in a predetermined position for selected electronic pages in response to said print mode parameter.

By way of example only, embodiments of the invention will be described in conjunction with the accompanying drawings wherein:

Figure 1 is a view depicting an electronic reprographic printing system incorporating a print media identification system in accordance with the present invention;

Figure 2 is a block diagram depicting the major elements of the printing system shown in Figure 1;

Figure 3 is a plan view illustrating the principal mechanical components of the printing system shown in Figure 1;

Figure 4 is a schematic view showing certain construction details of the document scanner for the printing system shown in Figure 1;

Figures 5a, 5b and 5c comprise a schematic block diagram showing the major parts of the control section for the printing system shown in Figure 1;

Figure 6 is a block diagram of the Operating System, together with Printed Wiring Boards and shared line connections for the printing system shown in Figure 1;

Figure 7 is a view depicting an exemplary job programming ticket and job scorecard displayed on the User Interface (UI) touchscreen of the printing system shown in Figure 1;

Figure 8 is a view depicting a job programming ticket with page numbering, and having the Mirror Location feature activated, and also showing the default page numbering position for a Portrait page;

Figure 9 is a view depicting the page numbering feature in an activated state, without a preselected page numbering location, but instead with the selection of "Other" location for the page numbering position;

Figure 10 is a view depicting the selection of the point size for the page number image;

Figure 11 is a flow chart depicting the steps involved in setting up page numbering for a standard print job;

Figure 12 shows a Portrait page with six possible present page numbering locations;

Figure 13 shows a Landscape page with six possible present page numbering locations;

Figure 14 shows Portrait head-to-head duplex pages with the Mirror Location mode inactivated;

Figure 15 shows Portrait head-to-head duplex pages with the Mirror Location mode activated;

Figure 16 shows Portrait head-to-toe duplex pages with the Mirror Location mode inactivated;

Figure 17 shows Portrait head-to-toe duplex pages with the Mirror Location mode activated;

Figure 18 shows Landscape head-to-toe duplex pages with the Mirror Location mode activated;

Figure 19 shows Landscape head-to-head duplex pages with the Mirror Location mode activated;

Figure 20 is a view depicting page numbering in an activated state, as well as with the selection of a Signature job with Mirror Location;

Figure 21 is a view depicting page numbering in an activated state with the print job selected as a Signature job, as well as with the "Other" location selected for the page number image;

Figure 22 is a flow chart showing the steps involved in setting up page numbering for a signature print job;

Figure 23 shows Signature duplex pages with the Mirror Location mode inactivated; and

Figure 24 shows Signature duplex pages with the Mirror Location mode activated.

## A. The System

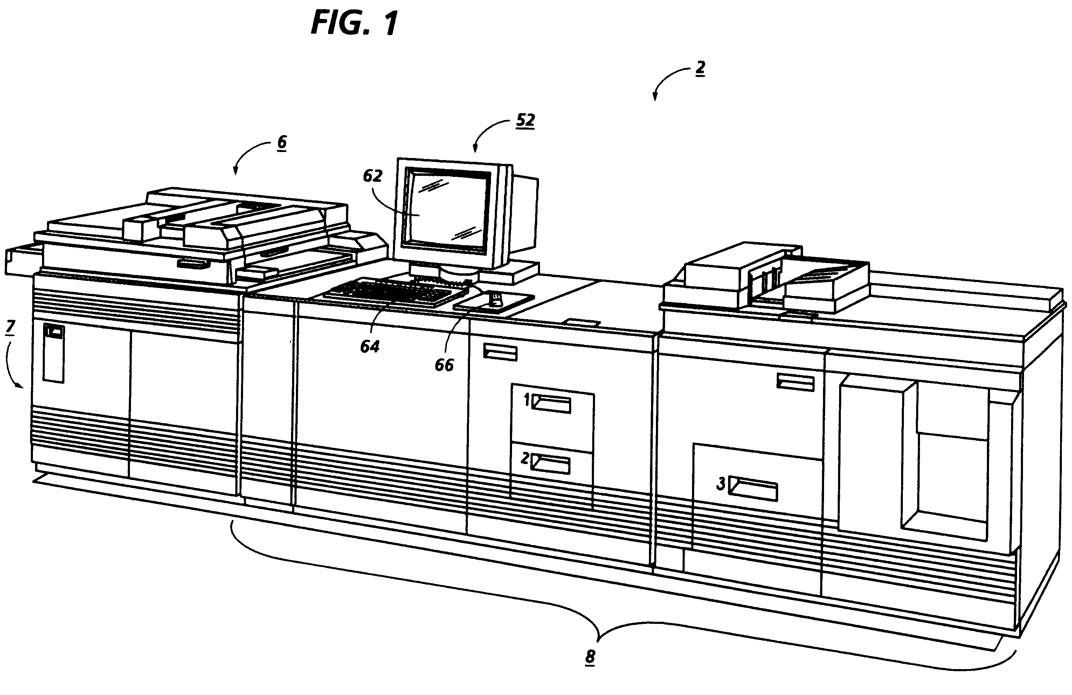

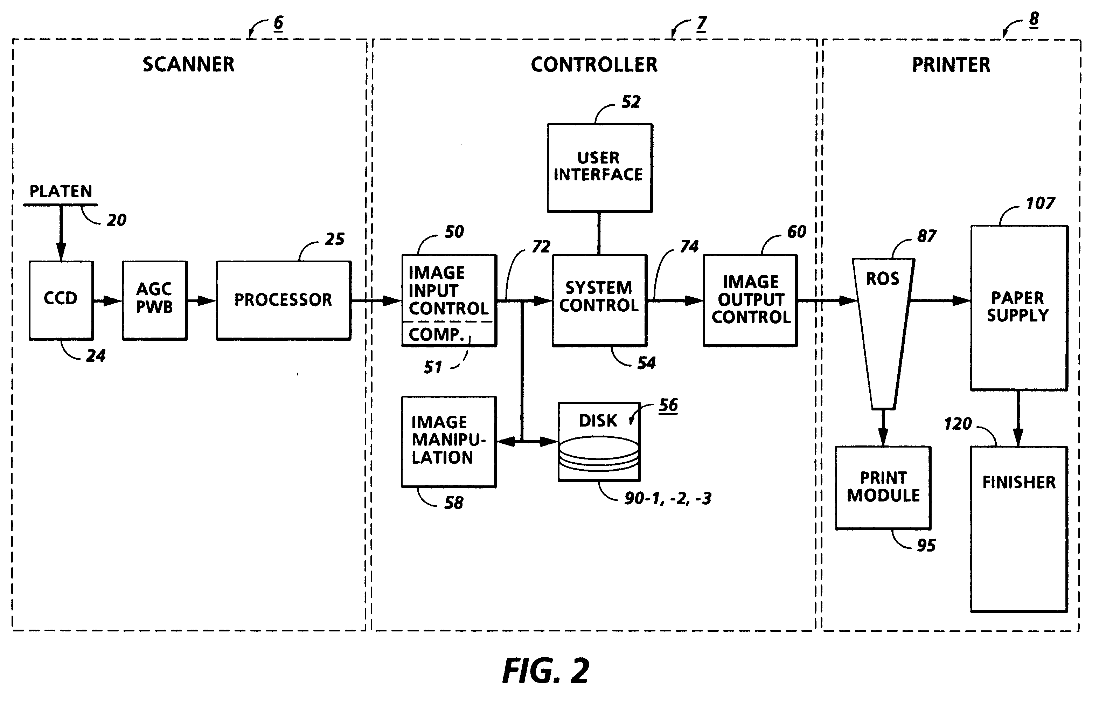

Referring to Figures 1 and 2, there is shown an exemplary laser based printing system 2 for processing print jobs. Printing system 2 for purposes of explanation is divided into a scanner section 6, controller section 7, and printer section 8. While a specific printing system is shown and described, the present invention may be used with other types of printing systems such as ink jet, ionographic, etc.

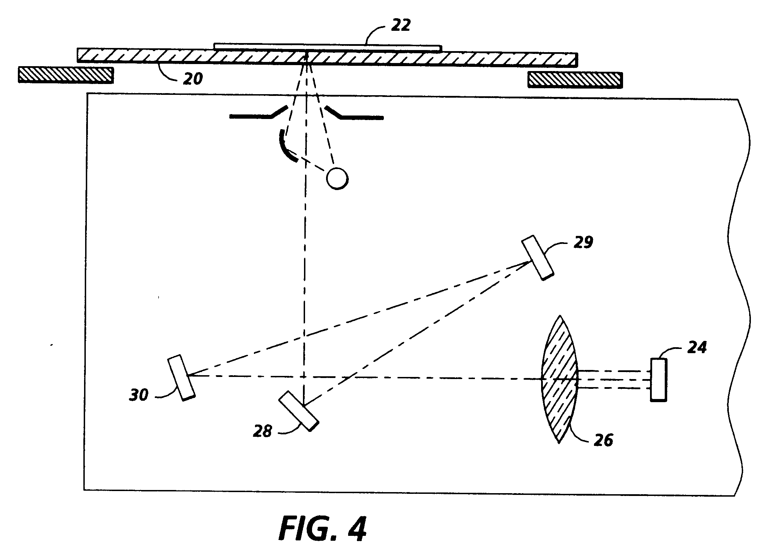

Referring particularly to Figures 2-4, scanner section 6 incorporates a transparent platen 20 on which the document 22 to be scanned is located. One or more linear arrays 24 are supported for reciprocating scanning movements below platen 20. Lens 27 and mirrors 28, 29, 30 cooperate to focus array 24 on a line like segment of platen 20 and the document being scanned thereon. Array 24 provides image signals or pixels representative of the image scanned which after suitable processing by processor 25, are output to controller section 7.

Processor 25 converts the analog image signals output by array 24 to digital and processes the image signals as required to enable system 2 to store and handle the image data in the form required to carry out the job programmed. Processor 25 also provides enhancements and changes to the image signals such as filtering, thresholding, screening, cropping, reduction/enlarging, etc. Following any changes and adjustments in the job program, the document must be rescanned.

Documents 22 to be scanned may be located on platen 20 for scanning by automatic document handler (ADF) 35 operable in either a Recirculating Document Handling (RDH) mode or a Semi-Automatic Document Handling (SADH) mode. A manual mode including a Book mode and a Computer Forms Feeder (CFF) mode are also provided, the latter to accommodate documents in the form of computer fanfold For RDH mode operation, document handler 35 has a document tray 37 in which documents 22 are arranged in stacks or batches. The documents 22 in tray 37 are advanced by vacuum feed belt 40 and document feed rolls 41 and document feed belt 42 onto platen 20 where the document is scanned by array 24. Following scanning, the document is removed from platen 20 by belt 42 and returned to tray 37 by document feed rolls 44.

For operation in the SADH mode, a document entry slot 46 provides access to the document feed 42 between tray 37 and platen 20 through which individual documents may be inserted manually for transport to platen 20. Feed rolls 49 behind slot 46 form a nip for engaging and feeding the document to feed belt 42 and onto platen 20. Following scanning, the document is removed from platen 20 and discharged into catch tray 48.

For operation in the CFF mode, computer forms material is fed through slot 46 and advanced by feed rolls 49 to document feed belt 42 which in turn advances a page of the fanfold material into position on plate 20.

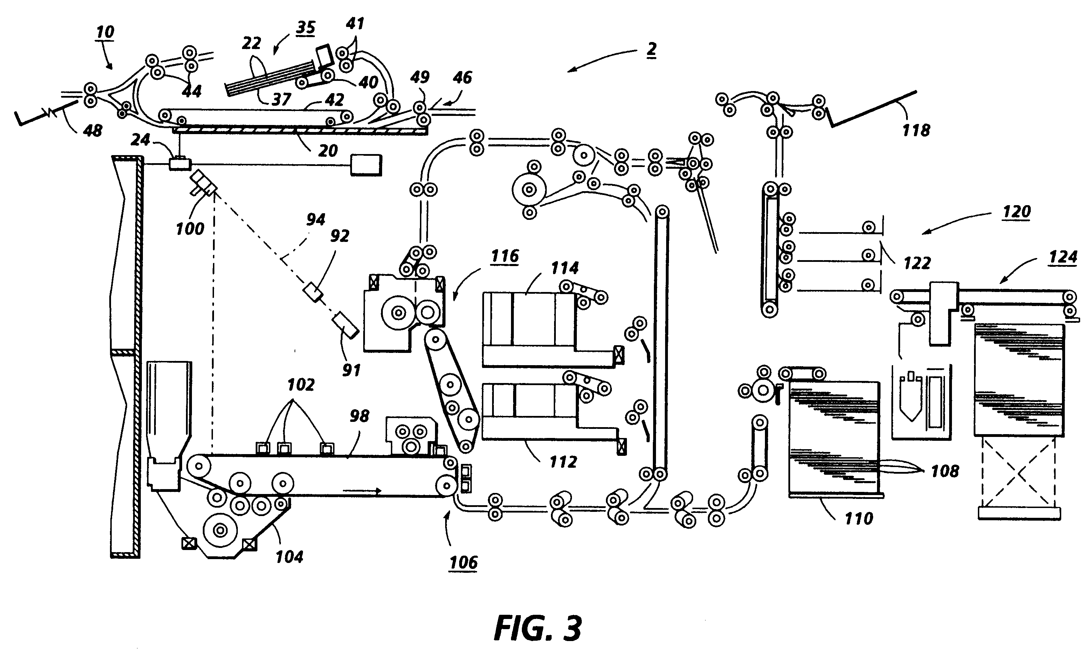

Referring to Figures 2 and 3, printer section 8 comprises a laser type printer and for purposes of explanation is separated into a Raster Output Scanner (ROS) section 87, Print Module Section 95, Paper Supply section 107, and Finisher 120. ROS 87 has a laser 91, the beam of which is split into two imaging beams 94. Each beam 94 is modulated in accordance with the content of an image signal input by acousto-optic modulator 92 to provide dual imaging beams 94. Beams 94 are scanned across a moving photoreceptor 98 of Print Module 95 by the mirrored facets of a rotating polygon 100 to expose two image lines on photoreceptor 98 with each scan and crate the latent electrostatic images represented by the image signal input to modulator 92. Photoreceptor 98 is uniformly charged by corotrons 102 at a charging station preparatory to exposure by imaging beams 94. The latent electrostatic images are developed by developer 104 and transferred at transfer station 106 to a print media 108 delivered by Paper Supply section 107. Media 108 as will appear may comprise any of a variety of sheet sizes, types, and colors. For transfer, the print media is brought forward in timed registration with the developed image on photoreceptor 98 from either a main paper tray 110 or from auxiliary paper trays 112, or 114. The developed image transferred to the print media 108 is permanently fixed or fused by fuser 116 and the resulting prints discharged to either output tray 118, or to finisher 120. Finisher 120 includes a stitcher 122 for stitching or stapling the prints together to form books and a thermal binder 24 for adhesively binding the prints into books.

Referring to Figures 1, 2 and 5, controller section 7 is, for explanation purposes, divided into an image input controller 50, User Interface (UI) 52, system controller 54, main memory 56, image manipulation section 58, and image output controller 60.

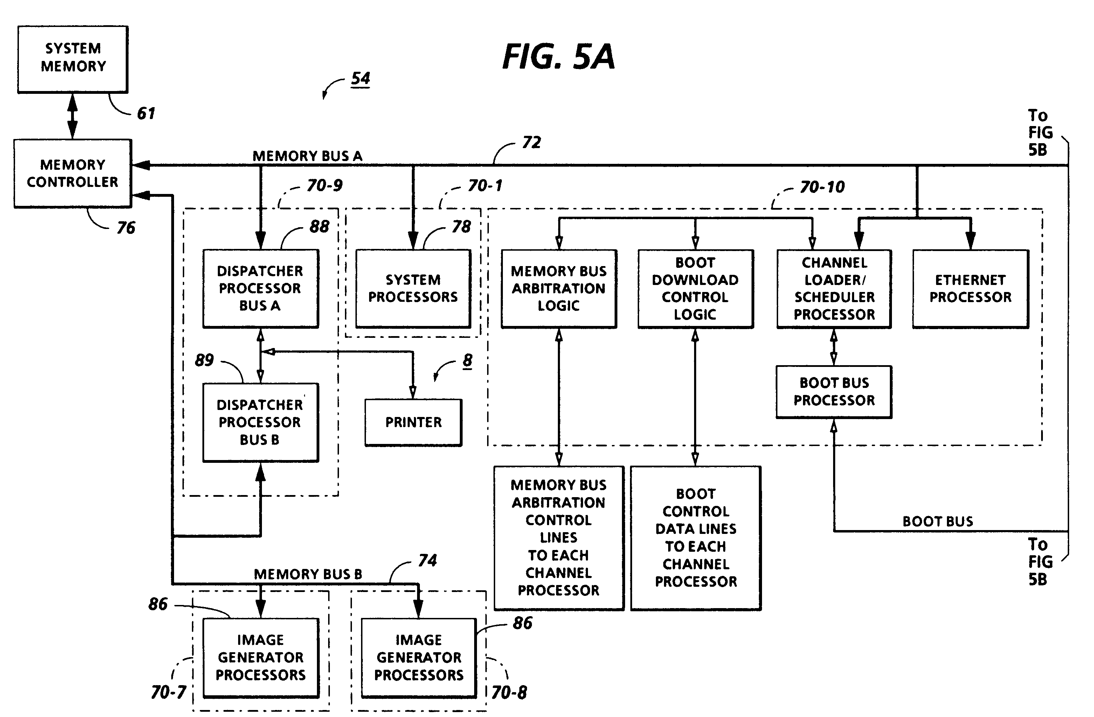

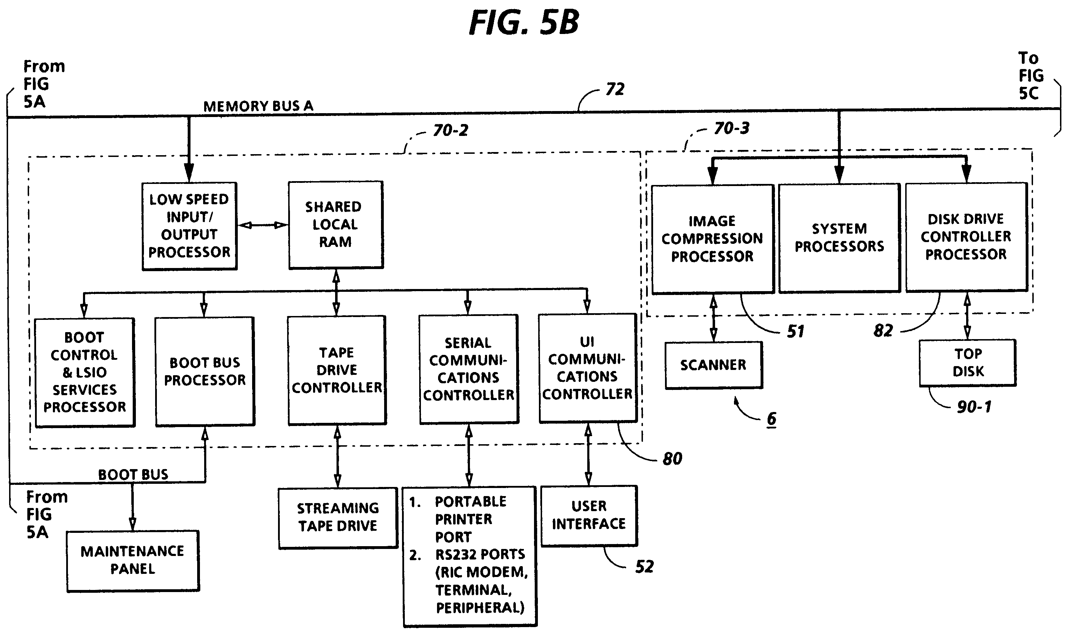

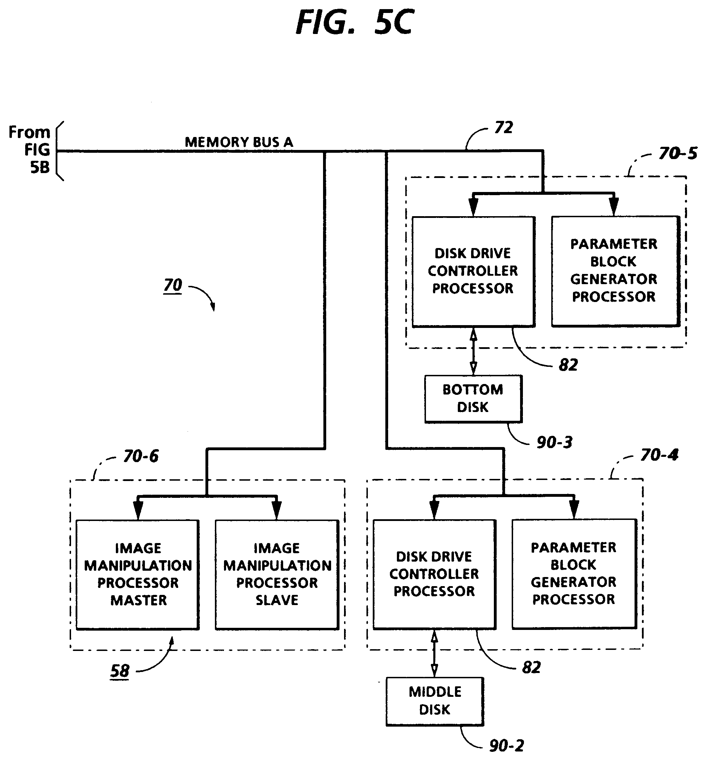

Referring particularly to Figures 5A-5C, control section 7 includes a plurality of Printed Wiring Boards (PWBs) 70, PWBs 70 being coupled with one another and with System Memory 61 by a pair of memory buses 72, 74. Memory controller 76 couples System Memory 61 with buses, 72, 74. PWBs 70 include system processor PWB 70-1 having plural system processors 78; low speed I/O processor PWB 70-2 having UI communication controller 80 for transmitting data to and from UI 52; PWBs 70-3, 70-4, 70-5 having disk drive controller/processor 82 for transmitting data to and from disks 90-1, 90-2, 90-3 respectively of main memory 56 (image compressor/processor 51 for compressing the image data is on PWB 70-3); image manipulation PWB 70-6 with image manipulation processors of image manipulation section 58; image generation processor PWBs 70-7, 70-8 with image generation processors 86 for processing the image data for printing by printer section 8; dispatch processor PWB 70-9 having dispatch processors 88, 89 for controlling transmission of data to and from printer section 8; and boot control-arbitration-scheduler PWB 70- 10.

The scanned image data input from processor 25 of scanner section 6 to controller section 7 is compressed by image compressor/processor 51 of image input controller 50 on PWB 70-3. As the image data passes through compressor/processor 51, it is segmented into slices N scanlines wide, each slice having a slice pointer. The compressed image data together with slice pointers and any related image descriptors providing image specific information (such as height and width of the document in pixels, the compression method used, pointers to the compressed image data, and pointers to the image slice pointers) are placed in an image file. The image files, which represent different print jobs, are temporarily stored in system memory 61 which comprises a Random Access Memory or RAM pending transfer to main memory 56 where the data is held pending use.

As best seen in Figure 1, UI 52 includes a combined operator controller/CRT display consisting of an interactive touchscreen 62, keyboard 64, and mouse 66. UI 52 interfaces the operator with printing system 2, enabling the operator to program print jobs and other instructions, to obtain system operating information, instructions, programming information, diagnostic information, etc. Items displayed on touchscreen 62 such as files and icons are actuated by either touching the displayed item on screen 62 with a finger or by using mouse 66 to point cursor 67 to the item selected and keying the mouse.

Main memory 56 has plural hard disks 90-1, 90-2, 90-3 for storing machine Operating System software, machine operating data, and the scanned image data currently being processed.

When the compressed image data in main memory 56 requires further processing, or is required for display on touchscreen 62 of UI 52, or is required by printer section 8, the data is accessed in main memory 56. Where further processing other than that provided by processor 25 is required, the daa is transferred to image manipulation section 58 on PWB 70-6 where the additional processing steps such as collation, make ready, decomposition, etc. are carried out. Following processing, the data may be returned to main memory 56, sent to UI 52 for display on touchscreen 62, or sent to image output controller 60.

Image data output to image output controller 60 is decompressed and readied for printing by image generating processors 86 of PWBs 70-7, 70-8 (seen in Figure 5A). Following this, the data is output by dispatch processors 88, 89 on PWB 70-9 to printer section 8. Image data sent to printer section 8 for printing is normally purged from memory 56 to make room for new image data.

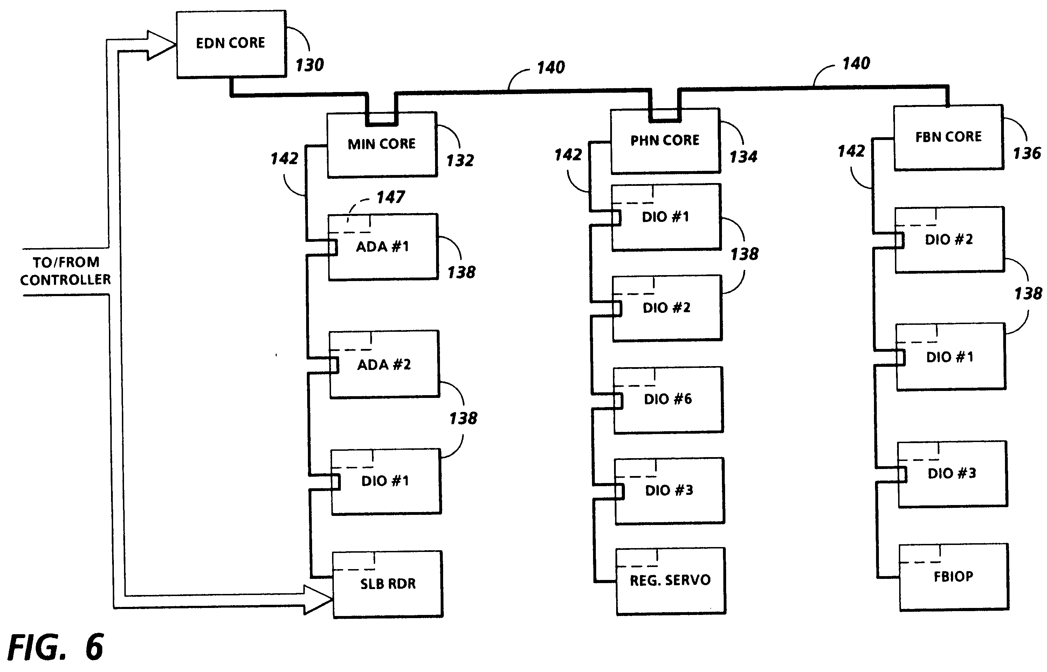

Referring particularly to Figure 6, system control signals are distributed via a plurality of printed wiring boards (PWBs). These include EDN core PWB 130, Marking Imaging core PWB 132, Paper Handling core PWB 134, and Finisher Binder core PWB 136 together with various Input/Output (I/O) PWBs 138. A system bus 140 couples the core PWBs 130, 132, 134, 136 with each other and with controller section 7 while local buses 142 serve to couple the I/O PWBs 138 with each other and with their associated core PWB.

On machine power up, the Operating System software is loaded from memory 56 to EDN core PWB 130 and from there to the remaining core PWBs 132, 134, 136 via bus 140, each core PWB 130, 132, 134, 136 having a boot ROM 147 for controlling downloading of Operating System software to the PWB, fault detection, etc. Boot ROMs 147 also enable transmission of Operating System software and control data to and from PWBs 130, 132, 134, 136 via bus 140 and control data to and from I/O PWBs 138 via local buses 142. Additional ROM, RAM, and NVM memory types are resident at various locations within system 2.

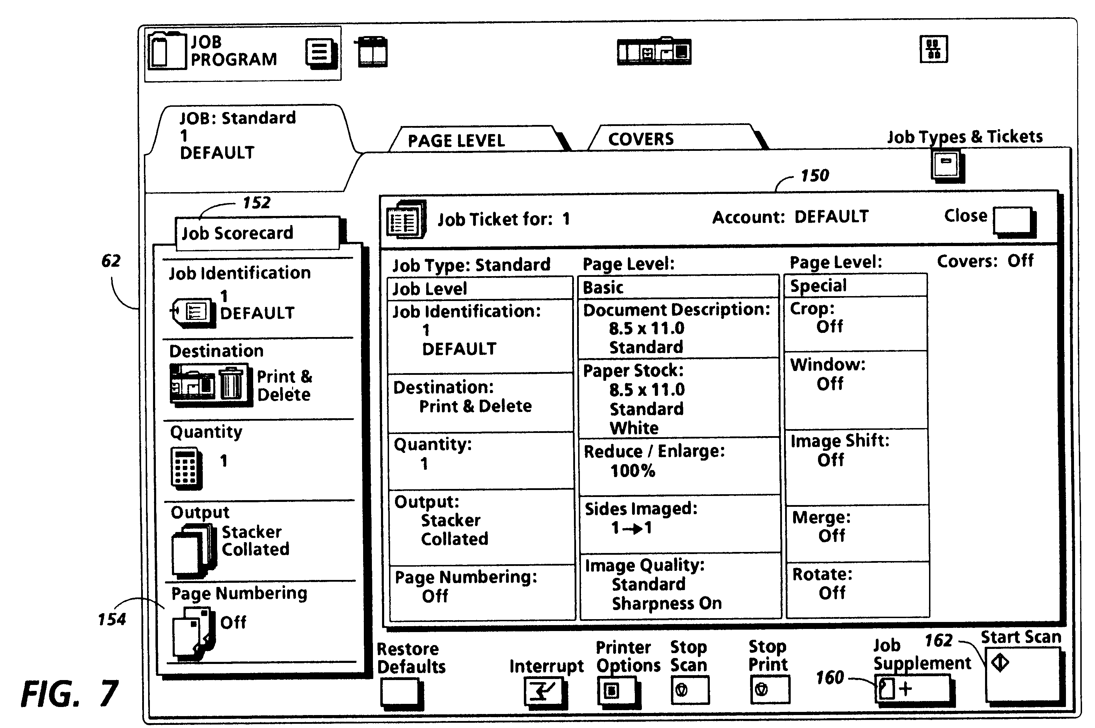

Referring to Figure 7, jobs are programmed in a Job Program mode in which there is displayed on touchscreen 62 a job Ticket 150 and a Job Scorecard 152 for the job being programmed. Job Ticket 150 displays various job selections programmed while Job Scorecard 152 displays the basic instructions to the system for printing the job.

B. Page Numbering

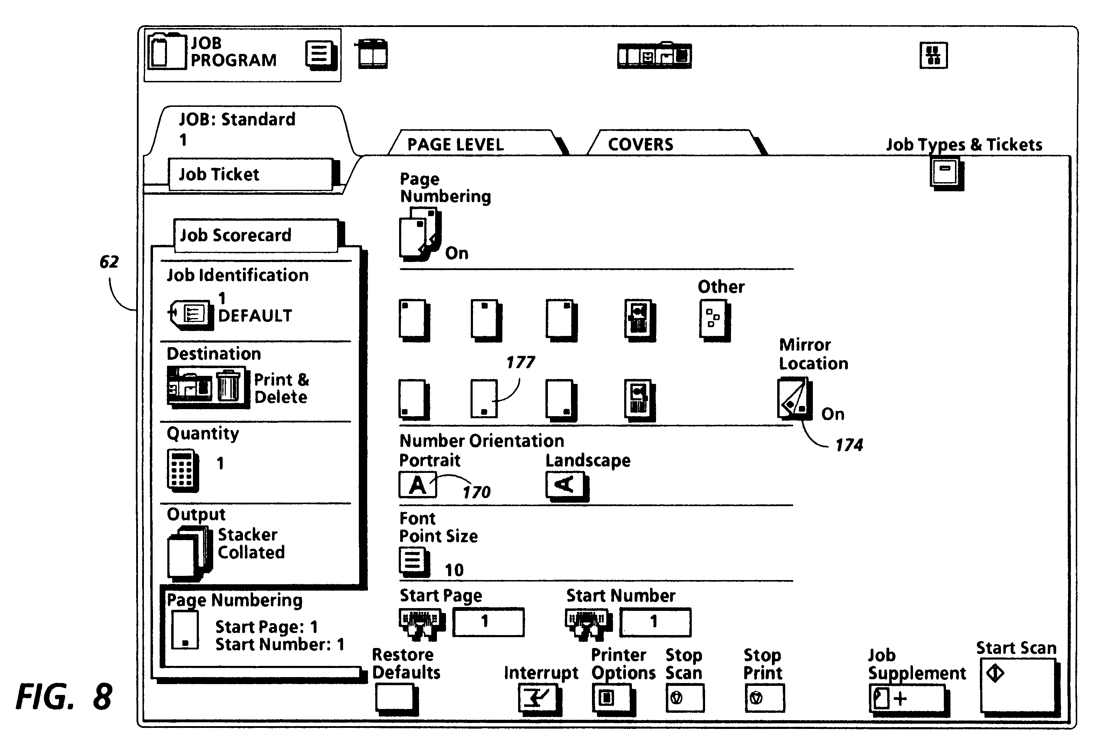

Referring again to Figure 7, the page numbering option, 154, is in a deactivated state. Upon activating the page numbering option, a page numbering screen is displayed (Figure 8) showing various page numbering preset locations. The default parameters are page numbering parameters that have been preprogrammed into the reprographic system based upon the most common page numbering needs of the system's users. The system operator, therefore, can immediately print a print job using page numbering default parameters, or can specify new page numbering parameters based on the specific print job involved. Figure 8 depicts possible preselected defaults for the page numbering system, including 8 preset positions for the page number. A portrait page 170 with the page number in the bottom center position 172, and mirror location in an activated state 174, would be a possible set of defaults on the page numbering screen.

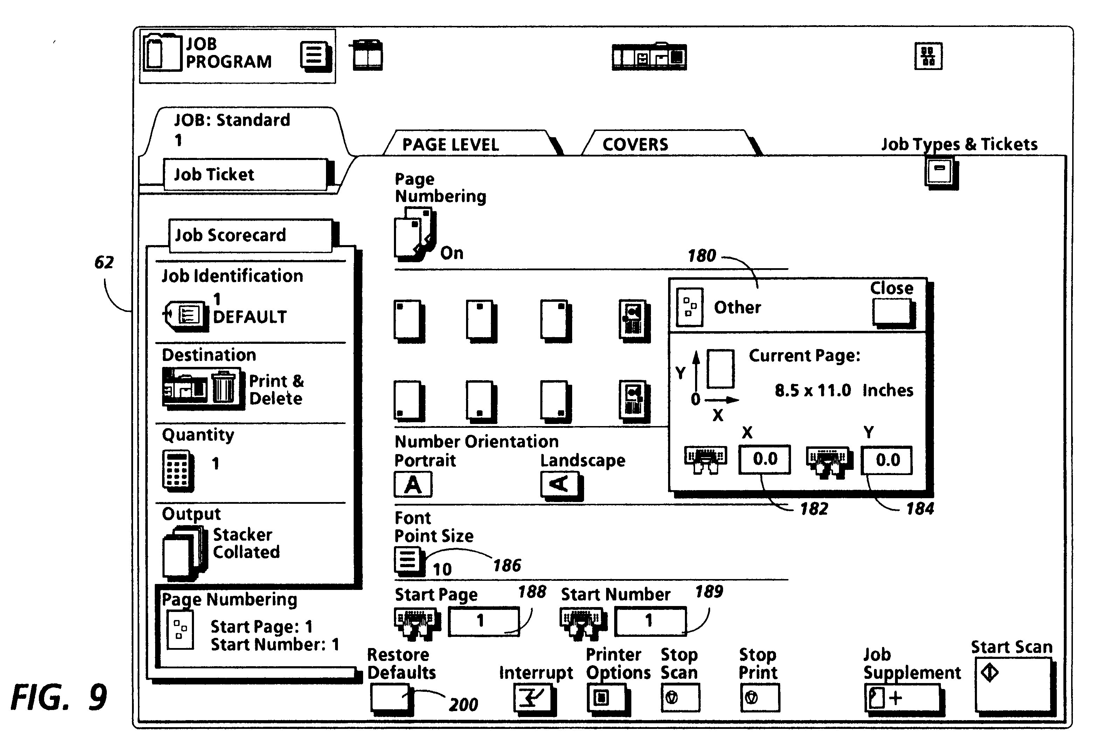

In Figure 9 if one of the preset page numbering positions is not desired, then "Other" 180 can be selected. The system operator can thus input the location of the page number by selecting both the horizontal 182 and vertical 184 distances from the edge of the page for the page number image.

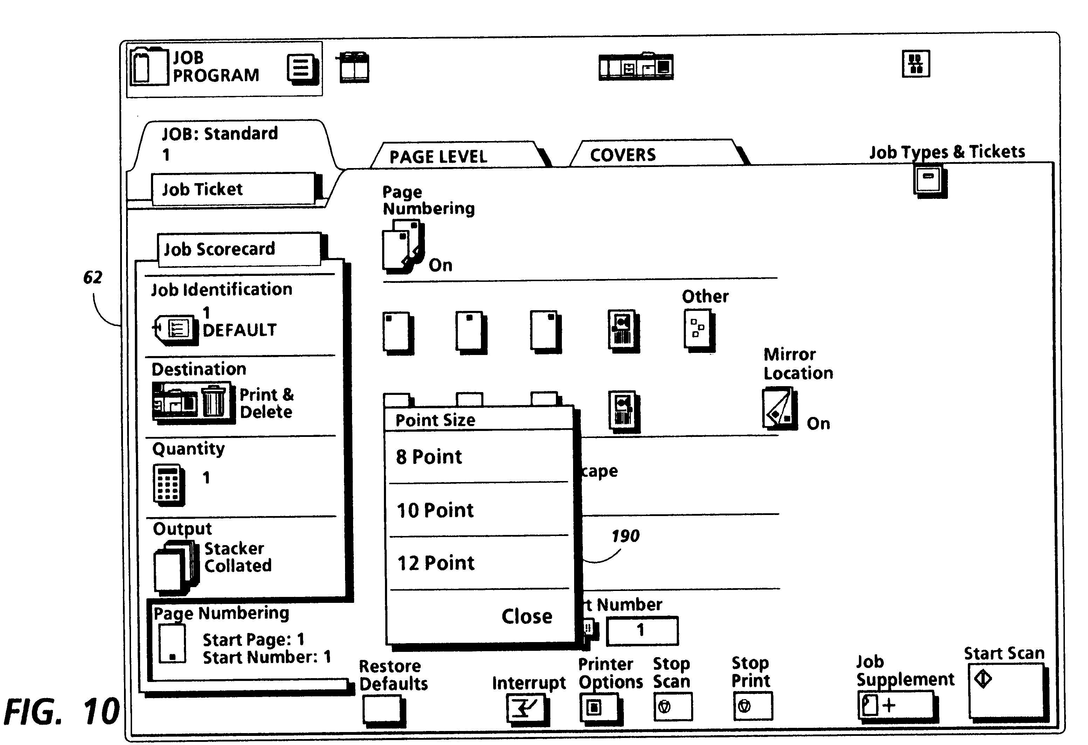

By selecting font point size 186 as shown in Figure 9, the system operator can determine the size of the page number image, by selecting from 8, 10 and 12 point sizes 190 as seen in Figure 10. The system operator can also select the starting page for the page numbering 188, as well as the initial number from which the page numbers will increase consecutively 189. The start page and start number can be input at the keyboard 64. After changing the page numbering defaults for a particular print job, the initial defaults can be reactivated for the next print job by selecting "Restore Defaults" 200.

When a page is scanned, the image is electronically stored in memory. At the user interface 52 of the controller 7, the page numbering feature can be activated, such that an electronic image of a page number according to either default parameters or system operator input parameters, is combined with a corresponding electronic image of a scanned page. The combined image is then printed on an output page.

One parameter that can be selected by the system operator is the Mirror Location mode 174 (Figure 8). The Mirror Location mode is especially desirable for use in creating two sided bound documents. When the system operator specifies the page number location of a left-hand page, the Mirror Location mode will automatically position the page number in a mirror image location on the right-hand page.

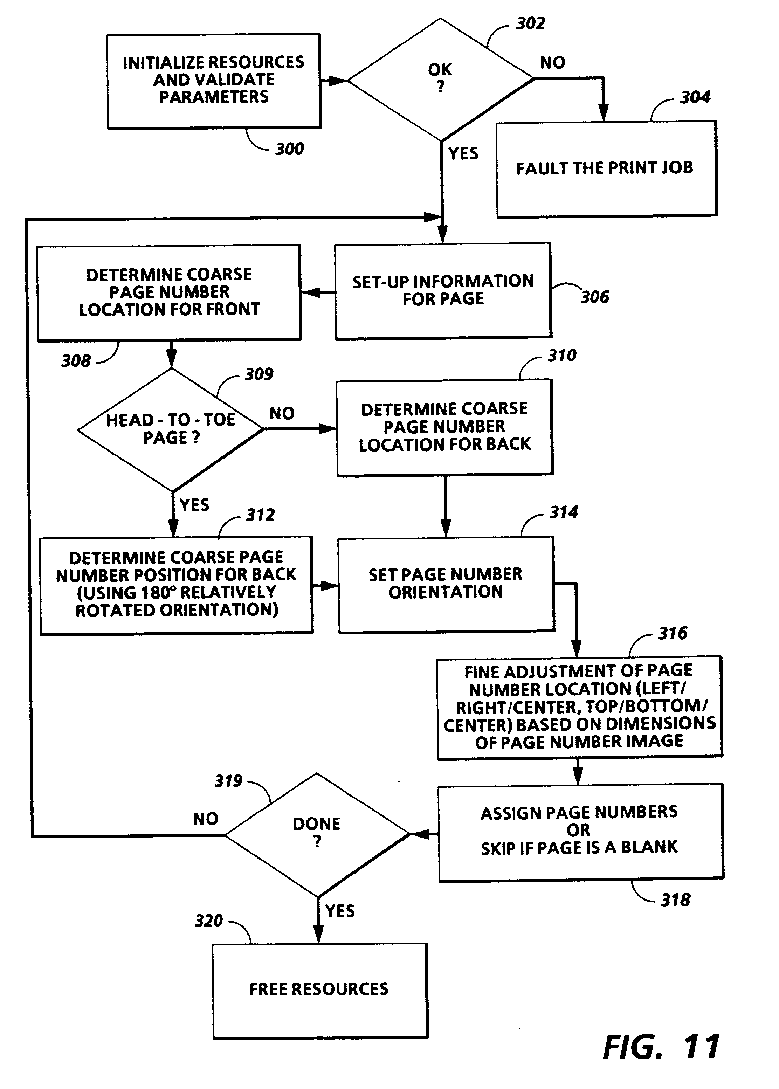

When printing a standard job, as best seen in Figure 11, the system operator must first initialize resources and validate parameters at step 300. When it is determined that the reprographic system is ready for the receipt of print job information at step 302, the information for the output pages is input at step 306 by the system operator. If the system is not ready for the receipt of page information, the print job is faulted at step 304. The set up information for the page can include the size of the page or the type of page (transparencies, drilled pages, tabs, etc.). Next, the course location for the page number is selected for the front side of the page at step 308. This course location can either be a preset location, or a specific location input by the system operator. If the page is a head-to-toe page (at step 309), the course page number position for the back side of the page must be determined using 180 degree relatively rotated orientation (step 312). If the print job does not involve head-to-toe pages, then the course page number location is separately determined for the back side of the page at step 310.

After determining the location of the page number, page number orientation must be selected at step 314 (Portrait or Landscape). Next, the page number location undergoes fine adjustment at step 316 based on the dimensions i-e. font size of the page number image. Subsequently, the page numbers are assigned to the electronic page images or no page numbers assigned if the page is a non-document page as determined at step 318. After all the information is input into the system 319, the resources can be freed 320.

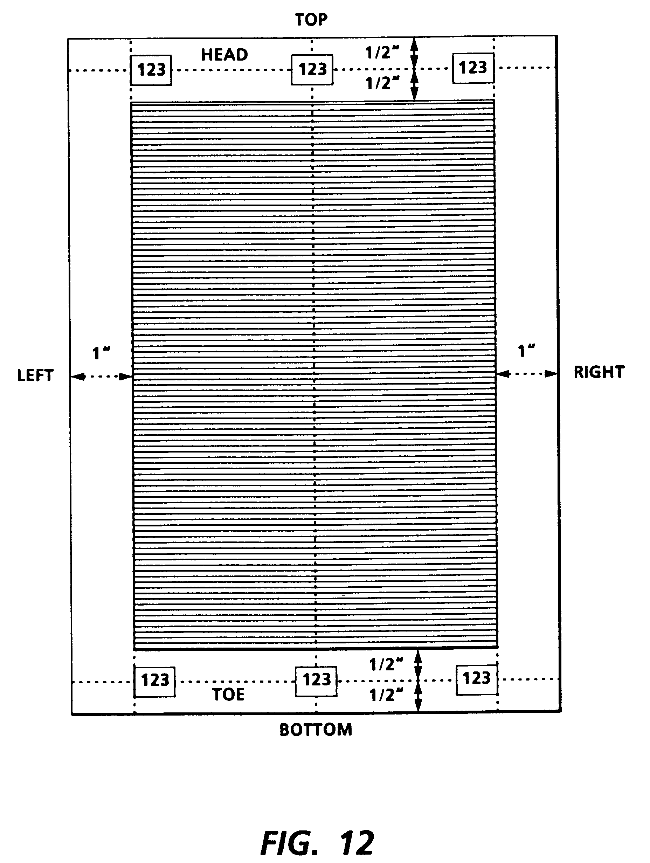

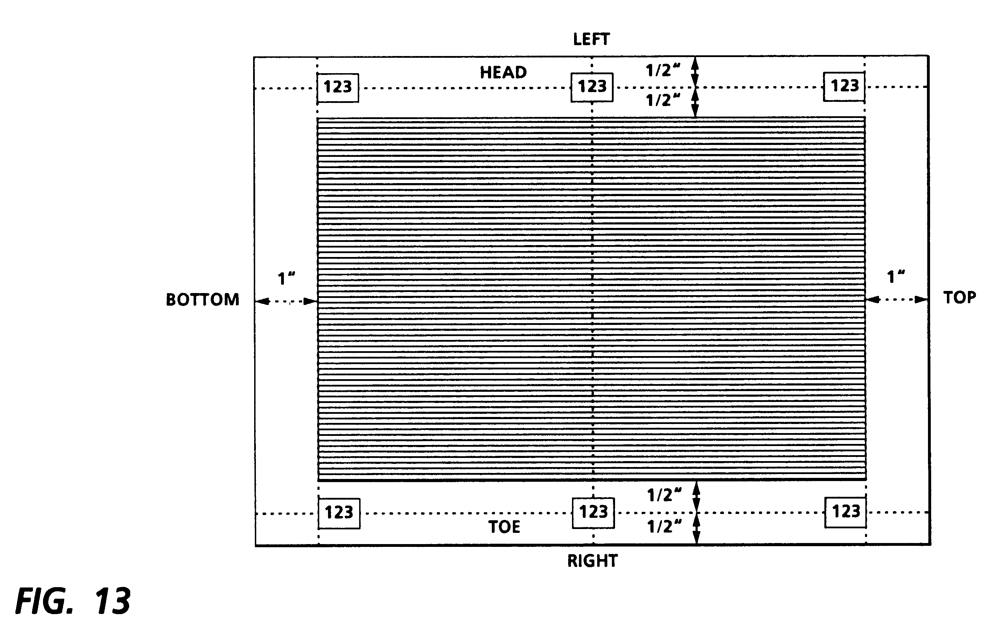

Referring now to Figures 12 and 13, Figure 12 shows three possible page number "123" locations at the top and bottom of a Portrait Page. Figure 12 depicts page numbering locations for 0° (top of the page) and 180° (bottom of the page). Figure 13, on the other hand, depicts page numbering locations for 90° (top of the page) and 270° (bottom of the page). Figures 12 and 13 each show six preset page numbering locations with the center position set as the default location (i.e., the position chosen by the system when none is specified by the System Operator). The exact distance of the page number from the edge of the page can be programmed by the System Operator, or if no distance is input a default of 1/2 inch from the edge of the page can be set (since the most typical margin width is 1 inch).

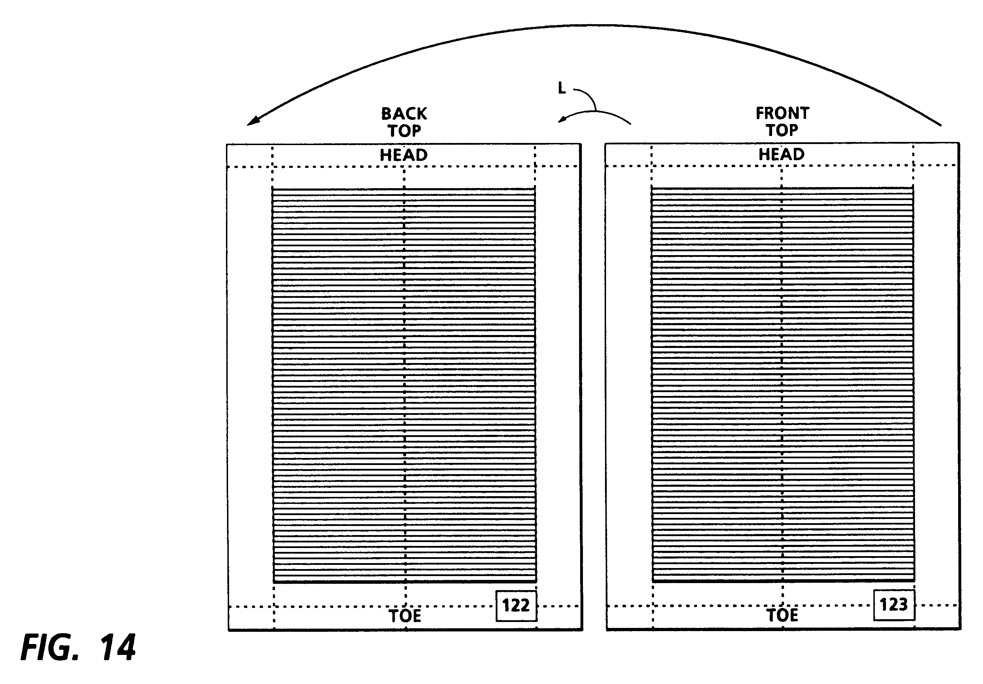

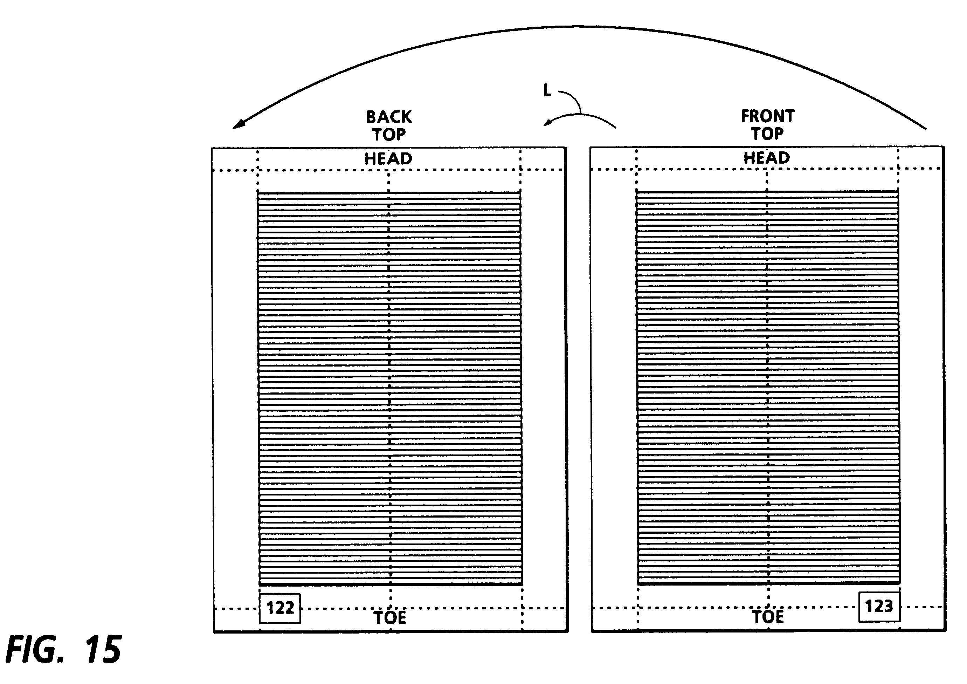

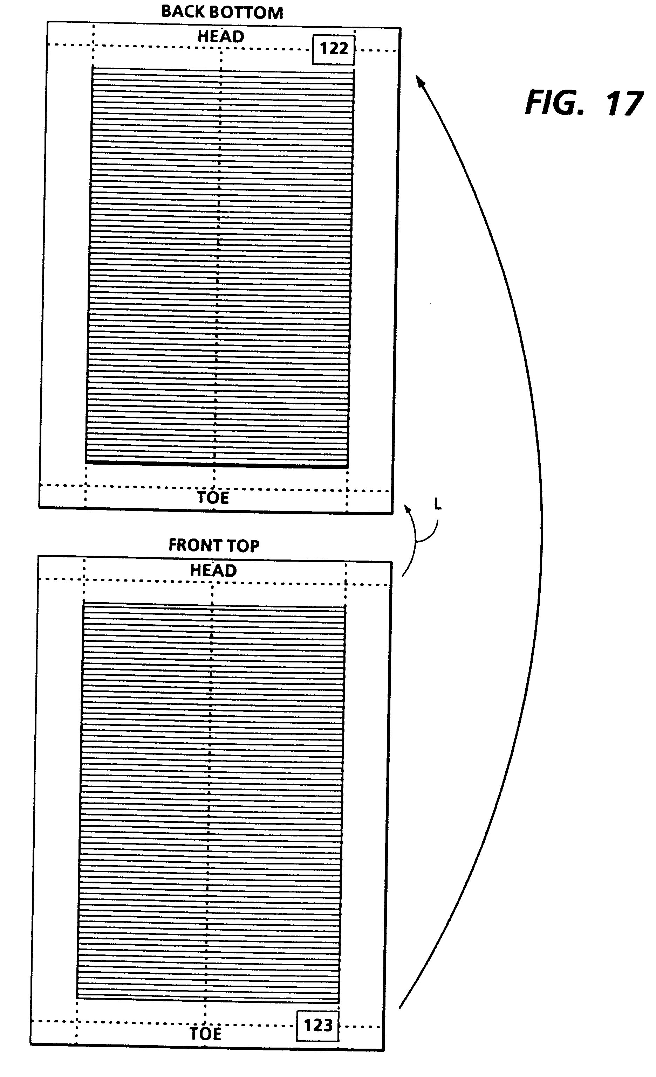

Referring to Figures 14 and 15, there are shown two-sided, head-to-head duplex pages wherein the binding is to be along the vertical length of the page (represented by arrow L). In Figure 14, the Mirror Location mode is inactive, such that on each page side, the page number is in the same physical location. However, in Figure 17, the Mirror Location mode is active, such that adjacent bound pages, such as pages 122 and 123, will show page numbers in positions which are essentially mirror images. The Mirror Location mode is often desirable in bound publications of document quality. This mode creates document quality printer output where all the page numbers can be positioned either away from the binding, or on each side of the duplex page nearest to the length of the page that will be bound.

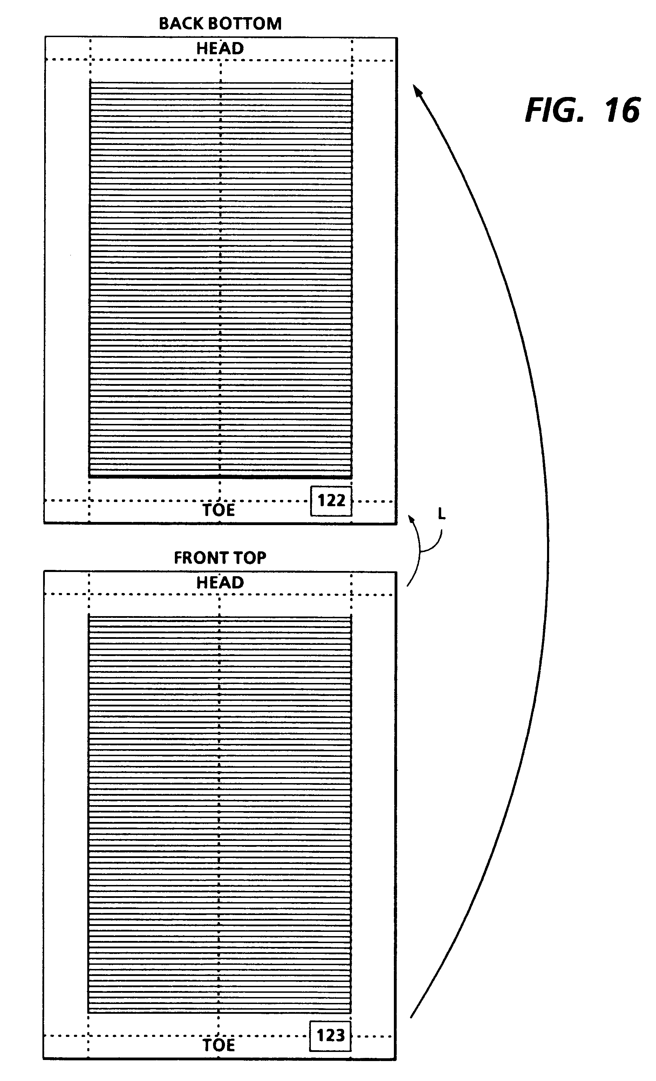

Figures 16 and 17 depict the Mirror Location mode inactive and active respectively, in a head-to-toe arrangement where the binding is intended to be along the short length of the page (represented by arrows). In Figure 17, the Mirror Location mode is active, and the page number on the second side of a duplex page will always be located directly behind the page number on the first side of the duplex page.

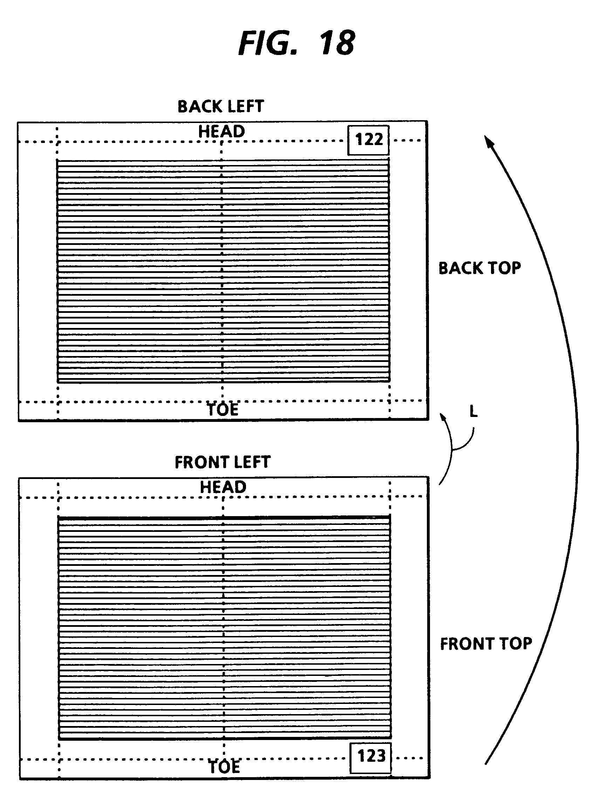

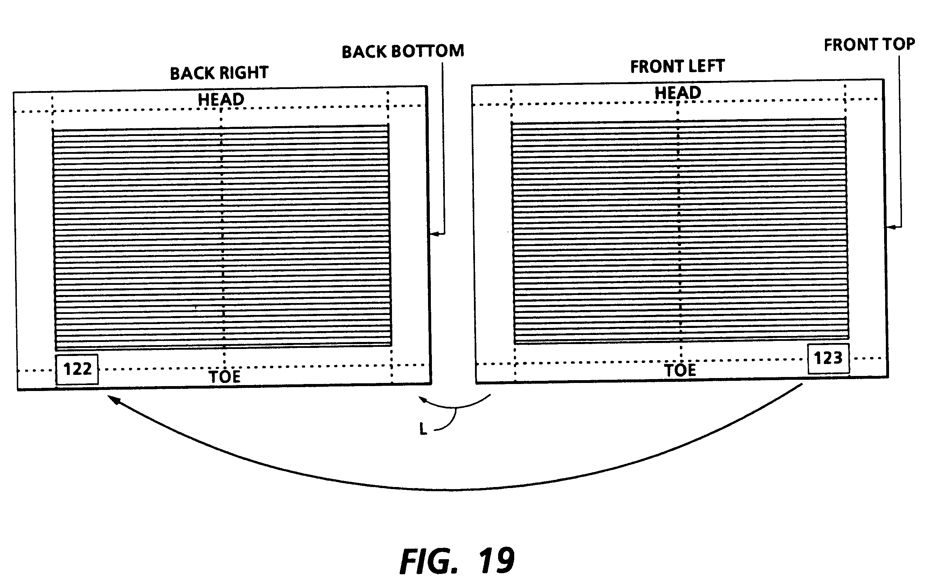

Figures 18 and 19 are further examples of the Mirror Location mode in an activated state (with bound edges represented by arrow L). Figure 18 is an example of the landscape head-to-toe arrangement and Figure 19 is an example of a landscape head-to-head arrangement.

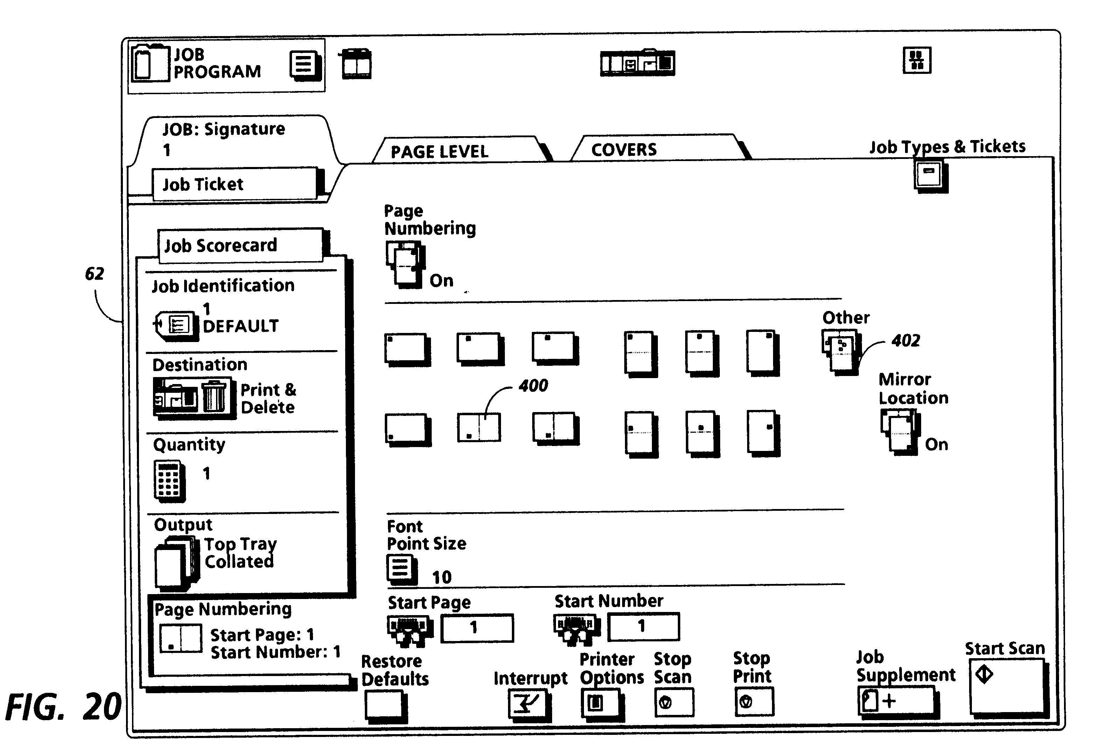

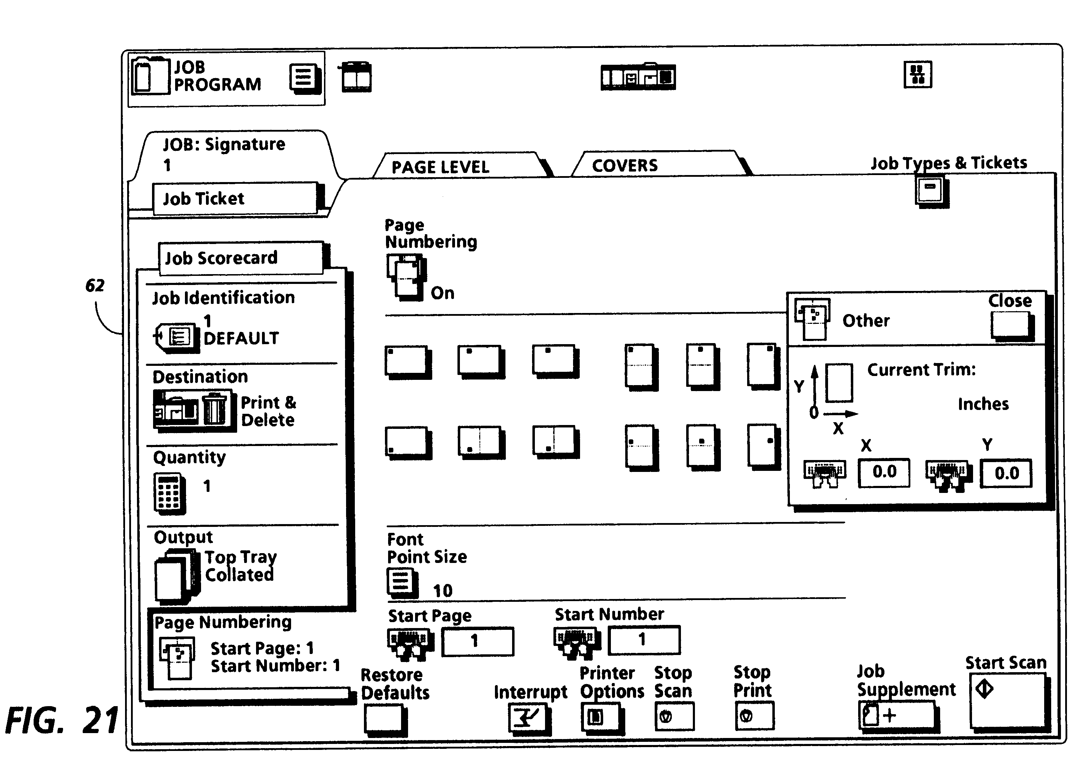

Figures 20 and 21 show preset page numbering locations for printing a signature job. In a signature job, two separate electronic page images are transferred to one side of an output page. Therefore, two input page numbering images are necessary for each side of the output page. Figure 20 illustrates 12 preset page number locations, with one such location 400 selected as the default. If the system operator desires a page number location other than those locations available as the 12 preset locations, the system operator can select "Other" 402 and determine the exact position of the page number as in Figure 21.

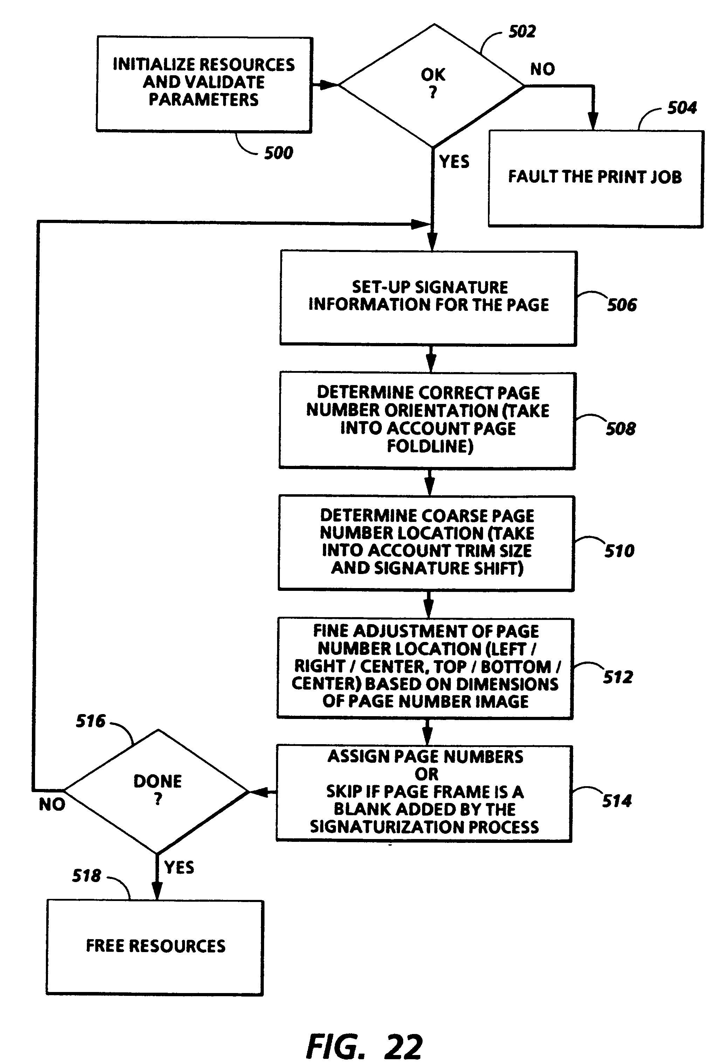

As shown in Figure 22, the system operator must first initialize resources and validate parameters at step 500 when printing a Signature job, just as in printing a standard job. If the reprographic system is not ready to receive print job specifications at step 502, the job is faulted at step 504. Otherwise, the system operator inputs information regarding the signature print job, such as the size of the pages, the type of pages, etc. at step 506. The system operator then determines the correct page number orientation at step 508, taking into account the fold line of the signature page. Next, the course page number location is determined at step 510, followed by fine adjustment of that location at step 512, depending on the size of the page number image. Lastly, page numbers are assigned to the electronic page images, or if an electronic image is a non-document page, no page number is assigned, as determined at step 514. In the Signaturization process, blank pages added to round out the signature print job do not receive page numbers. When all information has been input at step 516, the resources can be freed 518.

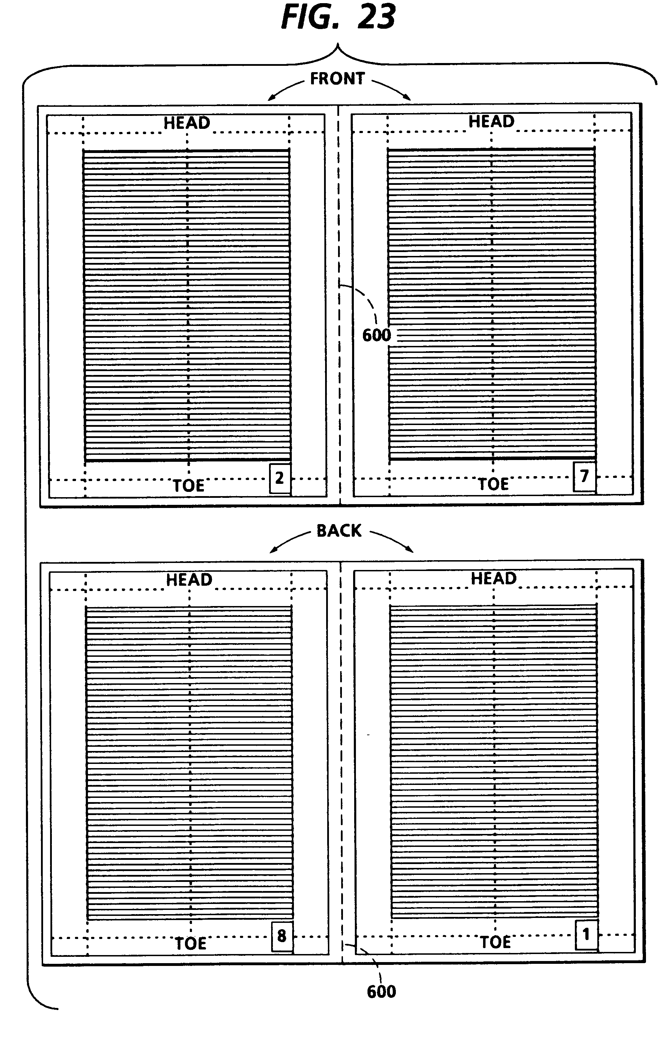

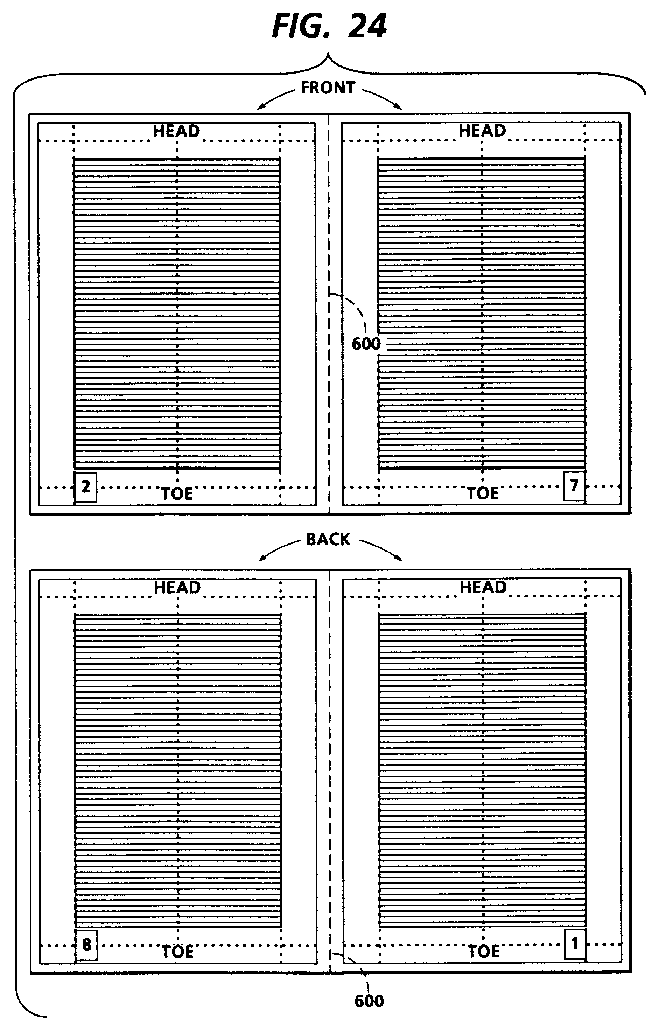

Figures 23 and 24 are examples of the Mirror Location mode inactive and active respectively on a page of Signature format. In a Signature format, there are essentially two printed sections to each side of a page, and the pages are be folded and bound along the middle dotted line 600 of the page. When the Mirror Location mode is active as in Figure 24, the page numbers (2, 7) in each section of the signature page will be at mirror image locations of each other when the page is folded.

All of the pages in a printing job will be sequentially numbered starting with page 1, unless a different start number is identified by the System Operator. Numbering will start with the first non-cover page as page 1, unless a different start page is identified, and end with the last non-cover page. Also, pages in the job will be numbered with respect to their plex. Simplex pages will be numbered only on the one printed side. Duplex pages, on the other hand, will be numbered on both the front and back printed sides. Pages of Signature jobs will be numbered in the sequential order of the input documents, not the sequential order of output pages, because two not necessarily sequential input page sides are joined to form one output page side

For a Signature job, the preset locations for page numbers are tied to the trim size. Thus, if trim is applied to a Signature job, the preset page number location will be measured from the trim size instead of the stock page size. For a standard job, only one page number per page side is permitted, and for a Signature job one page number per page frame (or two page numbers per page side) is permitted.

Not all pages within a print job need be numbered however. For example, the system operator can specify that certain electronic images are to be printed on output stock other than the standard output pages for the rest of the print job. Either before or after scanning, the system operator inputs the specifications of the output document page at the user interface 52. If the output document is specified as being, for example, a tab, insert, slip sheet, or blank page, the reprographic system will automatically skip such a page during the page numbering process. If the system operator specifies that the print job is a simplex job, the reprographic system will automatically skip the page numbering on the back sides of the output documents. Blank pages added during signaturization also will be skipped during page numbering.

The UI displays for the System Operator an icon, such as a shaded box or pound sign (#) on a right-hand sample page, in the exact position where the page number will appear on right-sided pages of the printed product. This icon effectively allows the system operator to recognize when the system's page numbering feature is activated, and further, to manipulate the location and orientation of the page numbers as they should appear on the final printed product. The system operator can manipulate the page number image on the system's User Interface 52 via touchscreen 62, keyboard 64, mouse 66, or the like.

Exemplary software programs for carrying out the procedures described above are set forth in the Appendix as follows:

PAGE NUMTYPES.MESA (Appendix A); PAGE NUMUTILITYIMPL.MESA (Appendix B); and PAGE NUMUTILITY-MESA (Appendix C).

Although the above disclosure deals predominantly with adding page number images to electronic page images created at the reprographic system's scanner, the page numbering method can easily be adapted for use with electronic page images sent from remote user work stations, tape input, or other sources of electronic page images.

Title:    PAGE NUMBER GENERATION AND FORMATTING IN ELECTRONIC REPROGRAPHIC/PRINTING PRODUCTS

Appendix:  A:    PAGENUMTYPES.MESA

## PAGENUMTYPES.MESA

```
DIRECTORY
  DirectoryType USING [ObjectID],
  Font USING [Orientation],
  RTOSFile USING [FileID],
  ResMgrStorage USING [Pages];

PageNumTypes: DEFINITIONS =
  BEGIN

  -- JOB LEVEL TYPES --

  -- If the fonts are referenced at Job Program time or Job Review time then load
  -- the full arm else if the font name is known then load the partial arm
  -- and the page number utility will get the font ids based on the fontName,
  -- point size & orientation else set the none arm and the page number utility
  -- will use MODERN (nonBold nonItalic) and the point size & orientation to get
  -- the fontIDs (or whatever the internal page numbering font is).
  --
  FontInfo: TYPE = RECORD [
    pointSize: CARDINAL ← 12,
    orientation: Orientation ← portrait0];

  Location: TYPE = RECORD [
    var: SELECT type: * FROM
      preset = > [presetX: PresetX ← center, presetY: PresetY ← bottom],
      other = > [x, y: CARDINAL]
      ENDCASE];

  Orientation: TYPE = {portrait0, landscape270};

  PageNumParms: TYPE = RECORD [
    font: FontInfo,
    location: Location,
    outer: BOOLEAN ← TRUE,
    skipLastSheet: BOOLEAN ← FALSE, -- IF TRUE THEN don't number last sheet.
                                    -- IF FALSE THEN number the last sheet.
    startNum: LONG CARDINAL ← 1, -- initial page number value
    startPage: CARDINAL ← 1, -- initial page in the job for numbering
    valid: BOOLEAN ← FALSE]; -- IF FALSE THEN page numbering is NOT programmed
                             -- IF TRUE THEN page numbering IS programmed.

  PageNumParmsPtr: TYPE = LONG POINTER TO PageNumParms ← NIL;

  PresetX: TYPE = {center, left, right};

  PresetY: TYPE = {bottom, top};


  -- PROCESS LEVEL TYPES --
```

```
CoarseLoc: TYPE = RECORD [
 horzLoc: CARDINAL,
 vertLoc: CARDINAL];

FineAdjustment: TYPE = RECORD [
 horz: HorizontalLocation,
 vert: VerticalLocation];

HorizontalLocation: TYPE = {left, center, right};

PageNumPos: TYPE = RECORD [
 coarseLoc: CoarseLoc,
 fineAdj: FineAdjustment,
 fontID: DirectoryType.ObjectID,
 fontSubDirID: DirectoryType.ObjectID,
 metricsFile: RTOSFile.FileID,
 metricPageLength: ResMgrStorage.Pages,
 metricPageOffset: ResMgrStorage.Pages,
 orientation: Font.Orientation];

SelectPageNum: TYPE = RECORD [
 var: SELECT type: * FROM
  none = > [],
  normal = > [num: LONG CARDINAL, pos: PageNumPos],
  signature = > [pageA: SignaturePageNumAttrib, pageB:
SignaturePageNumAttrib]
  ENDCASE];

SignaturePageNumAttrib: TYPE = RECORD [
 var: SELECT type: * FROM
 blank = > [],
 valid = > [num: LONG CARDINAL, position: PageNumPos]
 ENDCASE];

VerticalLocation: TYPE = {top, center, bottom};

END...
```

Title:       PAGE NUMBER GENERATION AND FORMATTING IN ELECTRONIC
             REPROGRAPHIC/PRINTING PRODUCTS


Appendix:  B:   PAGENUMUTILITYIMPL.MESA

## PAGENUMUTILITYIMPL.MESA

```
DIRECTORY
  Font USING [Orientation],
  FontDS USING [Error, ErrorCode],
  FontManager USING [MakeFontName],
  Heap USING [systemZone],
  Image USING [Box, nullHandle],
  Inline USING [LongDiv, LongMult],
  JobBackUp USING [LockID, nullLockID],
  JobID USING [ID, nullID],
  JobQ USING [GetJobID, GetNumberOfPages, GetNumberOfPageSides,
GetPageNumbering, GetSignatureJob],
  MRExtraLogger USING [Event, LogEvent, nullCode],
  MRPageNum USING [],
  MRSignatureInternal USING [GetSigBox],
  Page USING [GetBackImage, GetLast, GetNumberOfPage, GetNumberOfSide,
GetParameters, GetPlex, GetPrevious, Handle, nullHandle, Parameters, Side],
  PageNumJustify USING [Escapements, Heights, PosPtr],
  PageNumTypes USING [CoarseLoc, FineAdjustment, FontInfo, HorizontalLocation,
PageNumParms, PageNumParmsPtr, PageNumPos, PresetX, PresetY, SelectPageNum,
VerticalLocation],
  PageNumUtility USING [defaultPageNum, Direction, PageNum, Problem,
ProblemType],
  PublicPrinting USING [MediumDimensions, Plex],
  Real USING [RoundC],
  ResMgrStorage USING [Pages],
  RTOSFile USING [FileID],
  SignatureUtility USING [Error],
  String USING [AppendStringAndGrow, CopyToNewString],
  SystemFont USING [FontInfo, GetDefaultFontInfo, nullFontInfo, PtSize,
systemFontName];

PageNumUtilityImpl: PROGRAM
  IMPORTS FontDS, FontManager, Heap, Inline, JobQ, MRExtraLogger,
MRSignatureInternal, Page, Real, SignatureUtility, String, SystemFont
  EXPORTS MRPageNum, PageNumJustify, PageNumUtility =

  BEGIN

  -- TYPES --

  Error: PUBLIC SIGNAL [problem: PageNumUtility.Problem] = CODE;

  SeqInstance: PUBLIC TYPE = RECORD [
    currentSideNo: CARDINAL ← 0,
    direction: PageNumUtility.Direction ← nToOne,
    stdFont: SystemFont.FontInfo,
    httFont: SystemFont.FontInfo,
    jobID: JobID.ID ← JobID.nullID,
    jobParms: PageNumTypes.PageNumParms,
    notThisSide: CARDINAL,
```

```
numberOfSides: CARDINAL,
ptSize: SystemFont.PtSize];

SeqInstancePtr: TYPE = LONG POINTER TO SeqInstance ← NIL;

-- GLOBALS --

gFellOffEndCase: CARDINAL = 0;
gFontDSError: CARDINAL = 1;
gNilInstance:CARDINAL = 2;
gNilJobParms: CARDINAL = 3;
gSequenceError: CARDINAL = 4;
gSheetNotInJob: CARDINAL = 5;

-- PUBLIC PROCEDURES --

GetBox: PUBLIC PROCEDURE [lockID: JobBackUp.LockID, page: Page.Handle,
                         side: Page.Side]
            RETURNS [pageNumBox: Image.Box ← [0,0,0,0], valid: BOOLEAN ←
FALSE] =
  {sigJob: BOOLEAN;

  BEGIN
  ENABLE Error, SignatureUtility.Error = > GOTO failed;

  parms: PageNumTypes.PageNumParms;
  pn: PageNumTypes.SelectPageNum;
  parms ← JobQ.GetPageNumbering [lockID: lockID];

  IF (parms.valid = FALSE)
  THEN RETURN;

  [pn, valid] ← IF (sigJob ← JobQ.GetSignatureJob [lockID: lockID])
            THEN MRSignatureInternal.GetSigBox [lockID: lockID,
                                                 page: page,
                                                 side: side,
                                                 parms: @parms]

                ELSE GetStdBox [lockID: lockID, page: page,
                                side: side, parms: @parms];

  IF (valid)
  THEN [pageNumBox, valid] ← CalcBox [pn: pn];

  MRExtraLogger.LogEvent [module: pageNum, event: getBox,
   id: JobQ.GetJobID[lockID], code1: IF sigJob THEN 1 ELSE 0,
   code2: pageNumBox.xDimension, code3: pageNumBox.yDimension,
   code4: pageNumBox.xPosition, code5: pageNumBox.yPosition];

  EXITS
   failed = > {valid ← FALSE; pageNumBox ← [0,0,0,0];
        MRExtraLogger.LogEvent [module: pageNum, event: getBox,
                id: JobQ.GetJobID[lockID], code1: IF sigJob THEN 1 ELSE 0];
                };
```

```
END;
}; « GetBox »

SeqInit: PUBLIC PROCEDURE [direction: PageNumUtility.Direction,
                          jobParms: PageNumTypes.PageNumParmsPtr,
                          lockID: JobBackUp.LockID]
         RETURNS [seqInstancePtr: SeqInstancePtr ← NIL] =
{ENABLE Error = > {ErrorLogger [initComplete, lockID, problem, seqInstancePtr];

                   IF seqInstancePtr # NIL
                   THEN {Heap.systemZone.FREE[@seqInstancePtr];
                         seqInstancePtr ← NIL
                        };
                 };

numberOfPages: CARDINAL;
page: Page.Handle ← Page.nullHandle;
pnDelta: LONG CARDINAL;
rearCoversAdjust: CARDINAL;

SELECT TRUE FROM
  (jobParms = NIL) = > ERROR Error[[fatalError[gNilJobParms, 0]]];
  (NOT jobParms.valid) = >
    {MRExtraLogger.LogEvent [module: pageNum, event: initComplete,
               id: JobQ.GetJobID[lockID]];
     RETURN;
    };

ENDCASE;

seqInstancePtr ← Heap.systemZone.NEW[SeqInstance];
seqInstancePtr.direction ← direction;
seqInstancePtr.jobParms ← jobParms ↑ ;

seqInstancePtr.numberOfSides ← JobQ.GetNumberOfPageSides[lockID];
numberOfPages ← JobQ.GetNumberOfPages[lockID];
seqInstancePtr.jobID ← JobQ.GetJobID[lockID];

MRExtraLogger.LogEvent [module: pageNum, event: init,
  id: seqInstancePtr.jobID, code1: ORD[direction],
  code2: seqInstancePtr.numberOfSides];

IF (numberOfPages > 0 AND seqInstancePtr.jobParms.skipLastSheet)
THEN {page ← Page.GetLast[lockID];

      IF (Page.GetPlex[lockID, page] = simplex)
      THEN rearCoversAdjust ← 1
      ELSE rearCoversAdjust ← 2;

      page ← Page.GetPrevious[page, lockID];
     }

ELSE {page ← Page.GetLast [lockID];
```

```
      rearCoversAdjust ← 0;
          };

  seqInstancePtr.notThisSide ←
    SELECT TRUE FROM
            (page = Page.nullHandle) = > 0,
            (Page.GetPlex[lockID, page] = simplex) = > 0,
            (Page.GetBackImage[page, lockID] = Image.nullHandle) = >
                Page.GetNumberOfSide[lockID, page, back],
            ENDCASE = > 0;

  IF direction = nToOne
  THEN seqInstancePtr.currentSideNo ← seqInstancePtr.numberOfSides

  ELSE seqInstancePtr.currentSideNo ← 1;

  IF (LONG[seqInstancePtr.numberOfSides] <
    LONG[jobParms.startPage] + LONG[rearCoversAdjust])
  THEN {NULL; -- FUTURE LOCATION OF SIGNAL TO POST PARSE SCHED IN ME1.1
                    -- Appearance Warning 162.
        }

  ELSE {pnDelta ← LAST[LONG CARDINAL] - LONG[seqInstancePtr.numberOfSides]
+
            LONG[jobParms.startPage] + LONG[rearCoversAdjust];

            IF (pnDelta < jobParms.startNum)
        THEN ERROR Error [[pageNumberTooLarge[tooBigByThisAmount:
                                    (CARDINAL[jobParms.startNum - pnDelta])]]];
            };

  [stdFont: seqInstancePtr.stdFont, httFont: seqInstancePtr.httFont,
   ptSize: seqInstancePtr.ptSize] ←
    GetFonts[seqInstancePtr.jobParms.font];


  -- KLUDGE TO GET CORRECT POSITION FOR LANDSCAPE FONTS!
  -- THIS MUST BE REMOVED WHEN MICHAEL BARRETT PROVIDES THE
  -- 12 BUTTON PAGE NUMBER FRAME POST LAUNCH
  WITH seqInstancePtr.jobParms.location SELECT FROM
   preset = >
      {IF (seqInstancePtr.jobParms.font.orientation = landscape270 AND
                presetX # center)
          THEN {tX: PageNumTypes.PresetX ← presetX;
               tY: PageNumTypes.PresetY ← presetY;

                    presetY ← IF (tX = left) THEN top  ELSE bottom;
                    presetX ← IF (tY = top) THEN right ELSE left;
               };
          };

  ENDCASE;
  -- END OF THE KLUDGE
```

```
        MRExtraLogger.LogEvent [module: pageNum, event: initComplete,
         id: seqInstancePtr.jobID];
        }; « SeqInit »

    SeqNumber: PUBLIC PROCEDURE [headToToe: BOOLEAN,
                                 mediumDimensions:
    PublicPrinting.MediumDimensions,
                                 plex: PublicPrinting.Plex,
                                 seqInstancePtr: SeqInstancePtr]
                RETURNS [back,front: PageNumUtility.PageNum ←
                    PageNumUtility.defaultPageNum] =
        {ENABLE Error = > ErrorLogger[seqNumberError, JobBackUp.nullLockID,
    problem,
                                 seqInstancePtr];

        adjust: LONG CARDINAL ← LONG[seqInstancePtr.jobParms.startPage];
        num: LONG CARDINAL ← LONG[seqInstancePtr.currentSideNo] +
                                 seqInstancePtr.jobParms.startNum;
        posBack, posFront: PageNumTypes.PageNumPos;

        IF (seqInstancePtr = NIL)
        THEN ERROR Error [[fatalError[gNilInstance, 0]]];

        MRExtraLogger.LogEvent [module: pageNum, event: seqNumber,
         id: seqInstancePtr.jobID];

        IF (adjust > = num) THEN num ← 0 ELSE num ← num - adjust;

        IF (seqInstancePtr.currentSideNo = 0 OR
          seqInstancePtr.currentSideNo > seqInstancePtr.numberOfSides)
        THEN ERROR Error [[fatalError[gSequenceError, 0]]];

        [posBack: posBack, posFront: posFront] ← GetPos [
                dims: mediumDimensions,
                headToToe: headToToe,
                parms: @seqInstancePtr.jobParms,
                stdFont: seqInstancePtr.stdFont,
                httFont: seqInstancePtr.httFont,
                pageEdit: FALSE];

        IF (seqInstancePtr.direction = oneToN)
        THEN {FineAdjuster [num, @posFront, seqInstancePtr.ptSize, FALSE];
          IF (plex = duplex AND num # LAST[LONG CARDINAL])
                THEN FineAdjuster [num + 1, @posBack, seqInstancePtr.ptSize, FALSE];
                }

        ELSE IF (plex = duplex)
        THEN {FineAdjuster [num, @posBack, seqInstancePtr.ptSize, FALSE];
          IF (num > 0)
                THEN FineAdjuster [num-1, @posFront, seqInstancePtr.ptSize, FALSE];
                }

        ELSE FineAdjuster [num, @posFront, seqInstancePtr.ptSize, FALSE];
```

```
SELECT TRUE FROM
  ((seqInstancePtr.jobParms.skipLastSheet) AND
   (((plex = simplex OR (plex = duplex AND seqInstancePtr.direction = nToOne))
AND
        seqInstancePtr.currentSideNo = seqInstancePtr.numberOfSides) OR
       (plex = duplex AND seqInstancePtr.direction = oneToN AND
       seqInstancePtr.currentSideNo = seqInstancePtr.numberOfSides - 1))) = >
  {back ← front ← PageNumUtility.defaultPageNum;

       SELECT TRUE FROM
        (plex = simplex AND seqInstancePtr.direction = oneToN) = >
          {front.sideNo ← seqInstancePtr.currentSideNo;
               seqInstancePtr.currentSideNo ← seqInstancePtr.currentSideNo
  + 1;

          };

        (plex = simplex AND seqInstancePtr.direction = nToOne) = >
          {front.sideNo ← seqInstancePtr.currentSideNo;
               seqInstancePtr.currentSideNo ← seqInstancePtr.currentSideNo
  - 1;

          };

        (seqInstancePtr.direction = oneToN) = >
          {IF (seqInstancePtr.currentSideNo = seqInstancePtr.numberOfSides)
           THEN ERROR Error[[fatalError[gSequenceError, 0]]];

               front.sideNo ← seqInstancePtr.currentSideNo;
               back.sideNo ← seqInstancePtr.currentSideNo + 1;
               seqInstancePtr.currentSideNo ← seqInstancePtr.currentSideNo
  + 2;

          };

        (seqInstancePtr.direction = nToOne) = >
          {IF (seqInstancePtr.currentSideNo = 1)
               THEN ERROR Error[[fatalError[gSequenceError, 0]]];

               back.sideNo ← seqInstancePtr.currentSideNo;
               front.sideNo ← seqInstancePtr.currentSideNo - 1;
               seqInstancePtr.currentSideNo ← seqInstancePtr.currentSideNo
  - 2;
          };

        ENDCASE = > ERROR Error [[fatalError[gFellOffEndCase, 1]]];
      };

  (seqInstancePtr.direction = oneToN) = >
    {IF (LONG[seqInstancePtr.currentSideNo] <
        (LONG[seqInstancePtr.jobParms.startPage]))
     THEN front ← [parms: [none[]], sideNo: seqInstancePtr.currentSideNo]
     ELSE front ← [parms: [normal[num: num, pos: posFront]],
          sideNo: seqInstancePtr.currentSideNo];

     IF (plex = simplex)
     THEN back ← PageNumUtility.defaultPageNum
```

```
            ELSE {seqInstancePtr.currentSideNo ← seqInstancePtr.currentSideNo +
1;

            IF (seqInstancePtr.currentSideNo > seqInstancePtr.numberOfSides)
            THEN ERROR Error[[fatalError[gSequenceError, 0]]];

        num ← num + 1;

                IF (LONG[seqInstancePtr.currentSideNo] <
                  (LONG[seqInstancePtr.jobParms.startPage]))
                THEN back ← [parms: [none[]],
                            sideNo: seqInstancePtr.currentSideNo]

                ELSE IF (seqInstancePtr.currentSideNo =
                    seqInstancePtr.notThisSide)
                THEN back ← [parms: [none[]],
                            sideNo: seqInstancePtr.currentSideNo]

                ELSE back ← [parms: [normal[num: num, pos: posBack]],
                            sideNo: seqInstancePtr.currentSideNo];
                };

            seqInstancePtr.currentSideNo ← seqInstancePtr.currentSideNo + 1;
            };

        (seqInstancePtr.direction = nToOne) = >
          {IF (plex = simplex)

            THEN back ← PageNumUtility.defaultPageNum
            ELSE {IF (LONG[seqInstancePtr.currentSideNo] <
                  (LONG[seqInstancePtr.jobParms.startPage]))
                THEN back ← [parms: [none[]],
                            sideNo: seqInstancePtr.currentSideNo]

                ELSE IF (seqInstancePtr.currentSideNo =
                    seqInstancePtr.notThisSide)
                THEN back ← [parms: [none[]],
                            sideNo: seqInstancePtr.currentSideNo]

                ELSE back ← [parms: [normal[num: num, pos: posBack]],
                            sideNo: seqInstancePtr.currentSideNo];

                seqInstancePtr.currentSideNo ← seqInstancePtr.currentSideNo
- 1;

                IF (seqInstancePtr.currentSideNo = 0)
                THEN ERROR Error[[fatalError[gSequenceError, 0]]];

                num ← num - 1;
                };

            IF (LONG[seqInstancePtr.currentSideNo] <
              (LONG[seqInstancePtr.jobParms.startPage]))
```

```
        THEN front ← [parms: [none[]], sideNo: seqInstancePtr.currentSideNo]
        ELSE front ← [parms: [normal[num: num, pos: posFront]],
                sideNo: seqInstancePtr.currentSideNo];

        seqInstancePtr.currentSideNo ← seqInstancePtr.currentSideNo - 1;
        };

      ENDCASE = > ERROR Error [[fatalError[gFellOffEndCase, 2]]];

MRExtraLogger.LogEvent [
 module: pageNum,
 event: seqNumberComplete,
 id: seqInstancePtr.jobID,
 code1: (WITH front.parms SELECT FROM
              normal = > num,
              ENDCASE = > MRExtraLogger.nullCode),
 code2: (WITH front.parms SELECT FROM
              normal = > pos.coarseLoc.horzLoc,
              ENDCASE = > MRExtraLogger.nullCode),
 code3: (WITH front.parms SELECT FROM
              normal = > pos.coarseLoc.vertLoc,
              ENDCASE = > MRExtraLogger.nullCode),
 code4: (WITH back.parms SELECT FROM
              normal = > pos.coarseLoc.horzLoc,
              ENDCASE = > MRExtraLogger.nullCode),
 code5: (WITH back.parms SELECT FROM
              normal = > pos.coarseLoc.vertLoc,
              ENDCASE = > MRExtraLogger.nullCode)];
 }; « SeqNumber »

 SeqRestart: PUBLIC PROCEDURE [back, front: PageNumUtility.PageNum,
                            seqInstancePtr: SeqInstancePtr,
                                restart: BOOLEAN ← FALSE] =
 {IF (seqInstancePtr = NIL)
  THEN MRExtraLogger.LogEvent [module: pageNum, event: resetError,
        code1: ORD[PageNumUtility.ProblemType.fatalError],
            code2: gNilInstance, code3: 0]
  ELSE MRExtraLogger.LogEvent [module: pageNum, event: reset,
        id: seqInstancePtr.jobID, code1: IF restart THEN 1 ELSE 0,
            code2: ORD[seqInstancePtr.direction], code3: front.sideNo,
            code4: back.sideNo, code5: seqInstancePtr.currentSideNo];

 SELECT TRUE FROM
  (seqInstancePtr = NIL) = > ERROR Error [[fatalError[gNilInstance, 0]]];

  (restart AND seqInstancePtr.direction = nToOne) = >
    seqInstancePtr.currentSideNo ← seqInstancePtr.numberOfSides;

  (restart AND seqInstancePtr.direction = oneToN) = >
    seqInstancePtr.currentSideNo ← 1;

  (NOT restart AND seqInstancePtr.direction = nToOne AND
   front.sideNo < = seqInstancePtr.numberOfSides + 1 AND
        front.sideNo > 1) = >
```

```
seqInstancePtr.currentSideNo ← front.sideNo - 1;

(NOT restart AND seqInstancePtr.direction = oneToN AND back.sideNo = 0 AND
  front.sideNo < seqInstancePtr.numberOfSides) = >
    seqInstancePtr.currentSideNo ← front.sideNo + 1;

(NOT restart AND seqInstancePtr.direction = oneToN AND back.sideNo # 0 AND
  back.sideNo < seqInstancePtr.numberOfSides) = >
    seqInstancePtr.currentSideNo ← back.sideNo + 1;

ENDCASE = > {MRExtraLogger.LogEvent [module: pageNum, event: resetError,
        id: seqInstancePtr.jobID,
                code1: ORD[PageNumUtility.ProblemType.fatalError],
                code2: gSheetNotInJob, code3: 0];
          ERROR Error[[fatalError[gSheetNotInJob, 0]]];
                };
}; « SeqRestart »

SeqDestroy: PUBLIC PROCEDURE [seqInstancePtr: SeqInstancePtr] =
{IF (seqInstancePtr # NIL)
 THEN {MRExtraLogger.LogEvent [module: pageNum, event: cleanUp,
      id: seqInstancePtr.jobID];
    Heap.systemZone.FREE[@seqInstancePtr];
        }

 ELSE MRExtraLogger.LogEvent [module: pageNum, event: cleanUp];
 };

UniqNumber: PUBLIC PROCEDURE [jobParmsPtr:
PageNumTypes.PageNumParmsPtr,
                            lockID: JobBackUp.LockID, page:
Page.Handle]
            RETURNS [back, front:PageNumTypes.SelectPageNum ← [none[]]] =
 {ENABLE Error = > ErrorLogger[uniqNumberComplete, lockID, problem, NIL];

 backFlag: BOOLEAN ← FALSE;
 frontNum: CARDINAL;
 jobID: JobID.ID ← JobQ.GetJobID [lockID];
 numPages: CARDINAL;
 pageNum: CARDINAL;
 parms: Page.Parameters;
 pnDelta: LONG CARDINAL;
 pNum: LONG CARDINAL;
 posBack, posFront: PageNumTypes.PageNumPos;
 ptSize: SystemFont.PtSize;
 stdFont, httFont: SystemFont.FontInfo;

 IF (jobParmsPtr = NIL OR page = Page.nullHandle)
 THEN RETURN;

 IF (jobParmsPtr.valid = FALSE)
 THEN RETURN;

 frontNum ← Page.GetNumberOfSide [lockID: lockID, page: page, side: front];
```

```
numPages ← JobQ.GetNumberOfPages[lockID: lockID];
pageNum ← Page.GetNumberOfPage [lockID: lockID, page: page];
parms ← Page.GetParameters [page: page, lockID: lockID,
                                          zone: Heap.systemZone];

MRExtraLogger.LogEvent [module: pageNum, event: uniqNumber, id: jobID,
 code1: frontNum, code2: numPages, code3: pageNum];

IF (parms.medium.name # NIL)
THEN Heap.systemZone.FREE[@parms.medium.name];

IF (parms.medium.message # NIL)
THEN Heap.systemZone.FREE[@parms.medium.message];

IF (jobParmsPtr.skipLastSheet)
THEN {IF (pageNum = numPages) THEN RETURN;

        IF (pageNum = numPages - 1 AND
           Page.GetPlex[lockID, page] = duplex AND
           Page.GetBackImage[page, lockID] = Image.nullHandle)
         ..THEN backFlag ← TRUE;
         }

ELSE{IF (pageNum = numPages AND
          Page.GetPlex[lockID, page] = duplex AND
          Page.GetBackImage[page, lockID] = Image.nullHandle)
        THEN backFlag ← TRUE;
        };

[stdFont: stdFont, httFont: httFont, ptSize: ptSize] ←
   GetFonts [font: jobParmsPtr.font];

-- KLUDGE TO GET CORRECT POSITION FOR LANDSCAPE FONTS!
-- THIS MUST BE REMOVED WHEN MICHAEL BARRETT PROVIDES THE
-- 12 BUTTON PAGE NUMBER FRAME POST LAUNCH
WITH jobParmsPtr.location SELECT FROM
 preset = >
   {IF (jobParmsPtr.font.orientation = landscape270 AND
          presetX # center)
       THEN {tX: PageNumTypes.PresetX ← presetX;
             tY: PageNumTypes.PresetY ← presetY;

             presetY ← IF (tX = left) THEN top  ELSE bottom;
             presetX ← IF (tY = top) THEN right ELSE left;
         };
       };

ENDCASE;
-- END OF THE KLUDGE

[posBack: posBack, posFront: posFront] ← GetPos [
             dims: parms.medium.mediumDimensions,
             headToToe: parms.headToToe,
             parms: jobParmsPtr,
```

```
                    stdFont: stdFont,
                    httFont: httFont,
                    pageEdit: FALSE];

IF (frontNum > = jobParmsPtr.startPage)
THEN {pnDelta ← LAST[LONG CARDINAL] - LONG[frontNum] +
        LONG[jobParmsPtr.startPage];
    IF (pnDelta < jobParmsPtr.startNum)
        THEN ERROR Error [[pageNumberTooLarge[tooBigByThisAmount:
                (CARDINAL[jobParmsPtr.startNum - pnDelta])]]];

        pNum ← LONG[frontNum] - LONG[jobParmsPtr.startPage] +
            jobParmsPtr.startNum;

        FineAdjuster [pNum, @posFront, ptSize, FALSE];

        front ← [normal[num: pNum, pos: posFront]];
        };

IF (NOT backFlag AND
    frontNum + 1 > = jobParmsPtr.startPage AND parms.plex = duplex)
THEN {pnDelta ← LAST[LONG CARDINAL] - LONG[(frontNum + 1)] +
        LONG[jobParmsPtr.startPage];
    IF (pnDelta < jobParmsPtr.startNum)
        THEN ERROR Error [[pageNumberTooLarge[tooBigByThisAmount:
                (CARDINAL[jobParmsPtr.startNum - pnDelta])]]];

        pNum ← LONG[frontNum + 1] - LONG[jobParmsPtr.startPage] +
            jobParmsPtr.startNum;

        FineAdjuster [pNum, @posBack, ptSize, FALSE];

        back ← [normal[num: pNum, pos: posBack]];
    };

MRExtraLogger.LogEvent [module: pageNum, event: uniqNumberComplete,
    id: jobID];
}; « UniqNumber»



-- LOCAL PROCEDURES --

CalcBox: PROCEDURE [pn: PageNumTypes.SelectPageNum]
    RETURNS [pageNumBox: Image.Box, valid: BOOLEAN] =
{coarse: PageNumTypes.CoarseLoc;
dimL, dimH: CARDINAL;
fine: PageNumTypes.FineAdjustment;
orient: Font.Orientation;

pageNumBox ← [0,0,0,0];
valid ← TRUE;

WITH pn SELECT FROM
```

```
none = > valid ← FALSE;
normal = > {coarse ← pos.coarseLoc;
               fine ← pos.fineAdj;
               orient ← pos.orientation;
            };
signature = > {SELECT TRUE FROM
      (pageA = [blank[]] AND pageB = [blank[]]) = > valid ← FALSE;
            (pageA = [blank[]]) = >
               WITH pageB SELECT FROM
                  valid = > {coarse ← position.coarseLoc;
                              fine ← position.fineAdj;
                              orient ← position.orientation;
                           };
                  ENDCASE = > ERROR Error
                              [[fatalError[gFellOffEndCase, 3]]];
            (pageB = [blank[]]) = >
               WITH pageA SELECT FROM
                  valid = > {coarse ← position.coarseLoc;
                              fine ← position.fineAdj;
                              orient ← position.orientation;
                           };
                  ENDCASE = > ERROR Error
                              [[fatalError[gFellOffEndCase, 4]]];
            ENDCASE = > ERROR Error [[fatalError[gFellOffEndCase,
5]]];
         };
   ENDCASE = > ERROR Error [[fatalError[gFellOffEndCase, 6]]];

   IF (valid)
   THEN {dimL ← 300;
            dimH ← 150;

            SELECT orient FROM
             inversePortrait, portrait = >
               {pageNumBox.xDimension ← dimL;
                   pageNumBox.yDimension ← dimH;
               };

             inverseLandscape, landscape = >
               {pageNumBox.xDimension ← dimH;
                   pageNumBox.yDimension ← dimL;
               };

            ENDCASE = > ERROR Error [[fatalError[gFellOffEndCase, 7]]];

            pageNumBox.xPosition ← SELECT fine.horz FROM
                        left = > coarse.horzLoc,
                                    center = > INTEGER[coarse.horzLoc] -
INTEGER[pageNumBox.xDimension/2],
                                    right = > INTEGER[coarse.horzLoc] -
                                       INTEGER[pageNumBox.xDimension],
                        ENDCASE = > ERROR Error
                              [[fatalError[gFellOffEndCase, 8]]];
```

22

```
        pageNumBox.yPosition ← SELECT fine.vert FROM
                    top = > INTEGER[coarse.vertLoc] -
                                    INTEGER[pageNumBox.yDimension],
                        center = > INTEGER[coarse.vertLoc] -
INTEGER[pageNumBox.yDimension/2],
                            bottom = > coarse.vertLoc,
                            ENDCASE = > ERROR Error
                                [[fatalError[gFellOffEndCase, 9]]];
        };
    }; « CalcBox »

    ErrorLogger: PROCEDURE [event: MRExtraLogger.Event, lockID:
JobBackUp.LockID,
            problem: PageNumUtility.Problem, seq: SeqInstancePtr] =
    {jobID: JobID.ID;

    IF (seq # NIL)
    THEN jobID ← seq.jobID
    ELSE IF (lockID # JobBackUp.nullLockID)
    THEN jobID ← JobQ.GetJobID[lockID]
    ELSE jobID ← JobID.nullID;

    WITH problem SELECT FROM
        fatalError = > MRExtraLogger.LogEvent [module: pageNum, event: event,
                id: jobID, code1: ORD[type], code2: code,
                        code3: subCode];

            fontProblem = > MRExtraLogger.LogEvent [module: pageNum, event:
    event,
                    id: jobID, code1: ORD[type],
                        code2: IF faulted THEN 1 ELSE 0];

            pageNumberTooLarge = > MRExtraLogger.LogEvent [module:
    pageNum,
                    event: event, id: jobID, code1: ORD[type],
                            code2: tooBigByThisAmount];

            spare = > MRExtraLogger.LogEvent [module: pageNum, event: event,
                    id: jobID, code1: ORD[type]];

            ENDCASE;
    }; « ErrorLogger »

    FineAdjuster: PUBLIC PROCEDURE [num: LONG CARDINAL, pos:
PageNumJustify.PosPtr,
                            size: SystemFont.PtSize, hflSig: BOOLEAN]
    =
    {digits: REAL ← 1.0;
    fineBox: Image.Box ← [0,0,0,0];

    WHILE ((num ← num/10) > 0) DO digits ← digits + 1.0 ENDLOOP;
```

```
IF (pos.orientation = portrait OR pos.orientation = inversePortrait)
THEN {fineBox.xDimension ← Real.RoundC [digits *

PageNumJustify.Escapements[size]];
     fineBox.yDimension ← PageNumJustify.Heights[size];
          }

ELSE {fineBox.yDimension ← Real.RoundC [digits *

PageNumJustify.Escapements[size]];
     fineBox.xDimension ← PageNumJustify.Heights[size];
     };

fineBox.xPosition ←
  SELECT pos.orientation FROM
          portrait = >
            SELECT pos.fineAdj.horz FROM
                    left = >   pos.coarseLoc.horzLoc,
                    center = > INTEGER[pos.coarseLoc.horzLoc] -
                                    INTEGER[fineBox.xDimension/2],
                    right = >  INTEGER[pos.coarseLoc.horzLoc] -
                                    INTEGER[fineBox.xDimension],
                    ENDCASE = > ERROR Error [[fatalError[gFellOffEndCase,
10]]],

          inversePortrait = >
            SELECT pos.fineAdj.horz FROM
                    left = >   pos.coarseLoc.horzLoc,
                    center = > INTEGER[pos.coarseLoc.horzLoc] -
                                    INTEGER[fineBox.xDimension/2],
                    right = >  INTEGER[pos.coarseLoc.horzLoc] -
                                INTEGER[fineBox.xDimension],
                    ENDCASE = > ERROR Error [[fatalError[gFellOffEndCase,
11]]],

          landscape = >
            IF (hflSig)
                THEN SELECT pos.fineAdj.horz FROM
                        right = >  INTEGER[pos.coarseLoc.horzLoc] +
                                    INTEGER[fineBox.xDimension],
                        center = > INTEGER[pos.coarseLoc.horzLoc] +
                                    INTEGER[fineBox.xDimension/2],
                        left = >   pos.coarseLoc.horzLoc,
                        ENDCASE = > ERROR Error
[[fatalError[gFellOffEndCase,
                                                        12]]]
                ELSE SELECT pos.fineAdj.horz FROM
                        left = >   INTEGER[pos.coarseLoc.horzLoc] +
                                    INTEGER[fineBox.xDimension],
                        center = > INTEGER[pos.coarseLoc.horzLoc] +
                                    INTEGER[fineBox.xDimension/2],
                        right = >  pos.coarseLoc.horzLoc,
                        ENDCASE = > ERROR Error
[[fatalError[gFellOffEndCase,
```

24

```
                                                              12]]],

            inverseLandscape = >
              IF (hflSig)
                THEN SELECT pos.fineAdj.horz FROM
                           left = >  pos.coarseLoc.horzLoc,
                           center = > INTEGER[pos.coarseLoc.horzLoc] +
                                      INTEGER[fineBox.xDimension/2],
                           right = >  INTEGER[pos.coarseLoc.horzLoc] +
                                      INTEGER[fineBox.xDimension],
                           ENDCASE = > ERROR Error
[[fatalError[gFellOffEndCase,
                                                              13]]]
                ELSE SELECT pos.fineAdj.horz FROM
                           right = >  pos.coarseLoc.horzLoc,
                           center = > INTEGER[pos.coarseLoc.horzLoc] +
                                      INTEGER[fineBox.xDimension/2],
                           left = >   INTEGER[pos.coarseLoc.horzLoc] +
                                      INTEGER[fineBox.xDimension],
                           ENDCASE = > ERROR Error
[[fatalError[gFellOffEndCase,
                                                              13]]],

        ENDCASE = > ERROR Error [[fatalError[gFellOffEndCase, 14]]];

    fineBox.yPosition ←
      SELECT pos.orientation FROM
            portrait = >
              SELECT pos.fineAdj.vert FROM
                    top = >   INTEGER[pos.coarseLoc.vertLoc] -
                              INTEGER[fineBox.yDimension],
                    center = > INTEGER[pos.coarseLoc.vertLoc] -
                              INTEGER[fineBox.yDimension/2],
                    bottom = > pos.coarseLoc.vertLoc,
                    ENDCASE = > ERROR Error
                                   [[fatalError[gFellOffEndCase, 15]]],

            inversePortrait = >
              SELECT pos.fineAdj.vert FROM
                    top = >   INTEGER[pos.coarseLoc.vertLoc] -
                              INTEGER[fineBox.yDimension],
                    center = > INTEGER[pos.coarseLoc.vertLoc] -
                              INTEGER[fineBox.yDimension/2],
                    bottom = > pos.coarseLoc.vertLoc,
                    ENDCASE = > ERROR Error
                                   [[fatalError[gFellOffEndCase, 16]]],

            landscape = >
              IF (hflSig)
                THEN SELECT pos.fineAdj.vert FROM
                           bottom = > INTEGER[pos.coarseLoc.vertLoc] +
                                      INTEGER[fineBox.yDimension],
                           center = > INTEGER[pos.coarseLoc.vertLoc] +
                                      INTEGER[fineBox.yDimension/2],
```

```
                    top = >   pos.coarseLoc.vertLoc,
                    ENDCASE = > ERROR Error
[[fatalError[gFellOffEndCase,
                                                        17]]]
          ELSE SELECT pos.fineAdj.vert FROM
                    top = >   INTEGER[pos.coarseLoc.vertLoc] -
                              INTEGER[fineBox.yDimension],
                    center = > INTEGER[pos.coarseLoc.vertLoc] -
                              INTEGER[fineBox.yDimension/2],
                    bottom = > pos.coarseLoc.vertLoc,
                    ENDCASE = > ERROR Error
[[fatalError[gFellOffEndCase,
                                                        17]]],

      inverseLandscape = >
        IF (hflSig)
          THEN SELECT pos.fineAdj.vert FROM
                    bottom = > INTEGER[pos.coarseLoc.vertLoc] +
                              INTEGER[fineBox.yDimension],
                    center = > INTEGER[pos.coarseLoc.vertLoc] +
                              INTEGER[fineBox.yDimension/2],
                    top = >   pos.coarseLoc.vertLoc,
                    ENDCASE = > ERROR Error
[[fatalError[gFellOffEndCase,
                                                        18]]]
          ELSE SELECT pos.fineAdj.vert FROM
                    bottom = > INTEGER[pos.coarseLoc.vertLoc] -
                              INTEGER[fineBox.yDimension],
                    center = > INTEGER[pos.coarseLoc.vertLoc] -
                              INTEGER[fineBox.yDimension/2],
                    top = >   pos.coarseLoc.vertLoc,
                    ENDCASE = > ERROR Error
[[fatalError[gFellOffEndCase,
                                                        18]]],

      ENDCASE = > ERROR Error [[fatalError[gFellOffEndCase, 19]]];

    pos.coarseLoc.horzLoc ← IF (fineBox.xPosition < 0)
                            THEN 0 ELSE fineBox.xPosition;

    pos.coarseLoc.vertLoc ← IF (fineBox.yPosition < 0)
                            THEN 0 ELSE fineBox.yPosition;
    }; « FineAdjuster »

  GetFonts: PROCEDURE [font: PageNumTypes.FontInfo]
  RETURNS [stdFont, httFont: SystemFont.FontInfo, ptSize: SystemFont.PtSize] =
  {fontDSError: FontDS.ErrorCode;
   name1, name2: LONG STRING;
   notFound: BOOLEAN ← FALSE;
   orientation: Font.Orientation;

   SELECT font.pointSize FROM
     8 = > ptSize ← eight;
     10 = > ptSize ← ten;
```

```
        12 = > ptSize ← twelve;
        ENDCASE = > ERROR Error [[fatalError[gFellOffEndCase, 20]]];

        SELECT font.orientation FROM
          portrait0 = > orientation ← portrait;
          landscape270 = > orientation ← landscape;
          ENDCASE = > ERROR Error [[fatalError[gFellOffEndCase, 21]]];

        stdFont ← SystemFont.GetDefaultFontInfo [size: ptSize,
          orientation: orientation, resolution: 600
          ! FontDS.Error = > {notFound ← TRUE; fontDSError ← code; CONTINUE}];

        IF (notFound)
        THEN {name1 ← String.CopyToNewString[s: SystemFont.systemFontName,
                            z: Heap.systemZone];

              name2 ← FontManager.MakeFontName[
                          ptSize: font.pointSize, z: Heap.systemZone];

              String.AppendStringAndGrow [to:@name1, from:name2,
        z:Heap.systemZone];

              Heap.systemZone.FREE [@name2];

              SELECT fontDSError FROM
                fontFaulted = > ERROR Error [[fontProblem[name1, TRUE]]];
                fontNotFound, subdirectoryNotFound = >
                              ERROR Error [[fontProblem[name1, FALSE]]];
                ENDCASE = > {Heap.systemZone.FREE[@name1];
                              ERROR Error [[fatalError[gFontDSError, 0]]];
                              };
              };

        SELECT font.orientation FROM
          portrait0 = > orientation ← inversePortrait;
          landscape270 = > orientation ← inverseLandscape;
          ENDCASE = > ERROR Error [[fatalError[gFellOffEndCase, 22]]];

        httFont ← SystemFont.GetDefaultFontInfo [size: ptSize,
          orientation: orientation, resolution: 600
          ! FontDS.Error = > {notFound ← TRUE; fontDSError ← code; CONTINUE}];

        IF (notFound)
        THEN {name1 ← String.CopyToNewString[s: SystemFont.systemFontName,
                            z: Heap.systemZone];

              name2 ← FontManager.MakeFontName[
                          ptSize: font.pointSize, z: Heap.systemZone];

              String.AppendStringAndGrow [to:@name1, from:name2,
        z:Heap.systemZone];

              Heap.systemZone.FREE [@name2];
```

```
SELECT fontDSError FROM
    fontFaulted = > ERROR Error [[fontProblem[name1, TRUE]]];
    fontNotFound, subdirectoryNotFound = >
                    ERROR Error [[fontProblem[name1, FALSE]]];
    ENDCASE = > {Heap.systemZone.FREE[@name1];
                    ERROR Error [[fatalError[gFontDSError, 0]]];
                    };
        };
    }; « GetFonts »

GetPos: PROCEDURE [dims: PublicPrinting.MediumDimensions, headToToe:
BOOLEAN,
    parms: PageNumTypes.PageNumParmsPtr, stdFont, httFont: SystemFont.FontInfo,
    pageEdit: BOOLEAN]
    RETURNS [posBack, posFront: PageNumTypes.PageNumPos] =
    {horzBack, horzFront: PageNumTypes.HorizontalLocation;
    mediumX, mediumY: CARDINAL;
    orientBack, orientFront: Font.Orientation;
    pnXBack, pnXFront, pnYBack, pnYFront: INTEGER;
    vertBack, vertFront: PageNumTypes.VerticalLocation;

    mediumX ← Inline.LongDiv
    [num: 253 + Inline.LongMult [dims.widthInMillimeters, 6000],
        den: 254];

    mediumY ← Inline.LongDiv
    [num: 253 + Inline.LongMult [dims.lengthInMillimeters, 6000],
        den: 254];

    SELECT parms.font.orientation FROM
    portrait0 = >
        {vertBack ← vertFront ← center;
            WITH parms.location SELECT FROM
            preset = >
                {SELECT presetY FROM
                    bottom = > pnYBack ← pnYFront ← 300;
                    top = > pnYBack ← pnYFront ← INTEGER[mediumY] - 300;
                    ENDCASE = > ERROR Error [[fatalError[gFellOffEndCase,
23]]];

                SELECT TRUE FROM
                (presetX = center) = >
                    {horzBack ← horzFront ← center;
                        pnXBack ← pnXFront ← mediumX/2;
                        };

                (presetX = left AND parms.outer) = >
                    {horzBack ← right; horzFront ← left;
                        pnXBack ← INTEGER[mediumX] - 600; pnXFront ←
600;
                        };

                (presetX = left AND NOT parms.outer) = >
                    {horzBack ← horzFront ← left;
```

```
                                pnXBack ← pnXFront ← 600;
                                };

                    (presetX = right AND parms.outer) = >
                      {horzBack ← left; horzFront ← right;
                          pnXBack ← 600; pnXFront ← INTEGER[mediumX] -
        600;
                          };

                    (presetX = right AND NOT parms.outer) = >
                      {horzBack ← horzFront ← right;
                          pnXBack ← pnXFront ← INTEGER[mediumX] - 600;
                          };

                    ENDCASE = > ERROR Error [[fatalError[gFellOffEndCase,
        24]]];
                        };

            other = >
              {pnYBack ← pnYFront ← y;
               pnXFront ← x;

               IF (parms.outer)
               THEN pnXBack ← INTEGER[mediumX] - x
               ELSE pnXBack ← x;

               SELECT TRUE FROM
                (x = mediumX/2) = >
                    horzBack ← horzFront ← center;

                (x < mediumX/2 AND parms.outer) = >
                    {horzBack ← right; horzFront ← left;};

                (x < mediumX/2 AND NOT parms.outer) = >
                    horzBack ← horzFront ← left;

                (x > mediumX/2 AND parms.outer) = >
                    {horzBack ← left; horzFront ← right;};

                (x > mediumX/2 AND NOT parms.outer) = >
                    {horzBack ← horzFront ← right;};

                ENDCASE = > ERROR Error [[fatalError[gFellOffEndCase,
        25]]];
                    };

            ENDCASE = > ERROR Error [[fatalError[gFellOffEndCase, 26]]];
              };

    landscape270 = >
      {horzBack ← horzFront ← center;
          WITH parms.location SELECT FROM
            preset = >
              {SELECT TRUE FROM
```

```
                    (presetY = bottom AND parms.outer) = >
                      {pnXBack ← 300; pnXFront ← INTEGER[mediumX] - 300;};

                    (presetY = bottom AND NOT parms.outer) = >
                      {pnXBack ← pnXFront ← INTEGER[mediumX] - 300;};

                    (presetY = top AND parms.outer) = >
                      {pnXBack ← INTEGER[mediumX] - 300; pnXFront ← 300;};

                    (presetY = top AND NOT parms.outer) = >
                      {pnXBack ← pnXFront ← 300;};

                    ENDCASE = > ERROR Error [[fatalError[gFellOffEndCase,
      27]]];

                  SELECT presetX FROM
                  center = > {vertBack ← vertFront ← center;
                                      pnYBack ← pnYFront ← mediumY/2;
                                };

                  left = >  {vertBack ← vertFront ← bottom;
                                      pnYBack ← pnYFront ← 600;
                                };

                  right = > {vertBack ← vertFront ← top;
                                      pnYBack ← pnYFront ←
      INTEGER[mediumY] - 600;
                                };

                    ENDCASE = > ERROR Error [[fatalError[gFellOffEndCase,
      28]]];
                  };

              other = >
                {pnYBack ← pnYFront ← y;
                      pnXFront ← x;

                  IF (parms.outer)
                  THEN pnXBack ← INTEGER[mediumX] - x
                  ELSE pnXBack ← x;

                  SELECT TRUE FROM
                  (y = mediumY/2) = >
                    vertBack ← vertFront ← center;

                  (y < mediumY/2) = >
                    vertBack ← vertFront ← bottom;

                  (y > mediumY/2) = >
                    vertBack ← vertFront ← top;

                    ENDCASE = > ERROR Error [[fatalError[gFellOffEndCase,
      29]]];
                  };
```

```
                ENDCASE = > ERROR Error [[fatalError[gFellOffEndCase, 30]]];
           };

      ENDCASE = > ERROR Error [[fatalError[gFellOffEndCase, 31]]];

      SELECT TRUE FROM
        (parms.font.orientation = portrait0 AND NOT headToToe) = >
           orientBack ← orientFront ← portrait;

        (parms.font.orientation = portrait0 AND headToToe) = >
           {orientBack ← inversePortrait; orientFront ← portrait;};

        (parms.font.orientation = landscape270 AND
         NOT headToToe) = >
           orientBack ← orientFront ← landscape;

        (parms.font.orientation = landscape270 AND headToToe) = >
           {orientBack ← inverseLandscape; orientFront ← landscape;};

      ENDCASE = > ERROR Error [[fatalError[gFellOffEndCase, 32]]];

      IF (headToToe)
      THEN {IF (NOT pageEdit AND parms.outer)
          THEN {IF (INTEGER[mediumX - pnXBack] < 0)
                    THEN pnXBack ← 0
                    ELSE pnXBack ← mediumX - pnXBack;

                 IF (INTEGER[mediumY - pnYBack] < 0)
                    THEN pnYBack ← 0
                    ELSE pnYBack ← mediumY - pnYBack;

                 horzBack ← horzFront;
                };

                IF (NOT pageEdit AND NOT parms.outer AND
                    parms.font.orientation = landscape270)
                THEN {vertBack ← SELECT vertBack FROM
                        bottom = > top,
                                  center = > center,
                                  ENDCASE «top»   = > bottom;
                    };

                posBack ← [coarseLoc: [pnXBack,pnYBack], fineAdj:
      [horzBack,vertBack],
                fontID: httFont.font.fontDir,
                        fontSubDirID: httFont.font.fontSubDir,
                        metricsFile: httFont.metricsFile,
                        metricPageOffset: httFont.metricPageOffset,
                        metricPageLength: httFont.metricPageLength,
                        orientation: orientBack];
            }

      ELSE posBack ← [coarseLoc: [pnXBack,pnYBack], fineAdj: [horzBack,vertBack],
```

```
                fontID: stdFont.font.fontDir,
                        fontSubDirID: stdFont.font.fontSubDir,
                        metricsFile: stdFont.metricsFile,
                        metricPageOffset: stdFont.metricPageOffset,
                        metricPageLength: stdFont.metricPageLength,
                        orientation: orientBack];

    posFront ← [coarseLoc: [pnXFront, pnYFront], fineAdj: [horzFront, vertFront],
            fontID: stdFont.font.fontDir,
                    fontSubDirID: stdFont.font.fontSubDir,
                    metricsFile: stdFont.metricsFile,
                    metricPageOffset: stdFont.metricPageOffset,
                    metricPageLength: stdFont.metricPageLength,
                    orientation: orientFront];
    }; « GetPos »

    GetStdBox: PROCEDURE [lockID: JobBackUp.LockID, page: Page.Handle,
                            side: Page.Side, parms:
PageNumTypes.PageNumParmsPtr]
                RETURNS [pn: PageNumTypes.SelectPageNum ← [none[]],
                    valid: BOOLEAN ← FALSE] =
    {frontNum: CARDINAL;
    numPages: CARDINAL;
    pageNum: CARDINAL;
    pageParms: Page.Parameters;
    pnDelta: LONG CARDINAL;
    posBack, posFront: PageNumTypes.PageNumPos;

    frontNum ← Page.GetNumberOfSide [lockID: lockID, page: page, side: front];
    numPages ← JobQ.GetNumberOfPages [lockID: lockID];
    pageNum ← Page.GetNumberOfPage [lockID: lockID, page: page];
    pageParms ← Page.GetParameters [page: page, lockID: lockID,
                            zone: Heap.systemZone];

    IF (pageParms.medium.name # NIL)
    THEN Heap.systemZone.FREE[@pageParms.medium.name];

    IF (pageParms.medium.message # NIL)
    THEN Heap.systemZone.FREE[@pageParms.medium.message];

    IF (parms.skipLastSheet AND pageNum = numPages) THEN RETURN;

    [posBack: posBack, posFront: posFront] ← GetPos [
                dims: pageParms.medium.mediumDimensions,
                headToToe: pageParms.headToToe,
                parms: parms,
                stdFont: SystemFont.nullFontInfo,
                httFont: SystemFont.nullFontInfo,
                pageEdit: TRUE];

    IF (side = front)
    THEN {IF (frontNum > = parms.startPage)
            THEN {pnDelta ← LAST[LONG CARDINAL] - LONG[frontNum] +
                            LONG[parms.startPage];
```

```
                    IF (pnDelta < parms.startNum)
                    THEN ERROR Error
[[pageNumberTooLarge[tooBigByThisAmount:
                                    (CARDINAL[parms.startNum-pnDelta])]]];

                    pn ← [normal[num: LONG[frontNum] - LONG[parms.startPage]
    +
                                    parms.startNum,
                            pos: posFront]];

                    valid ← TRUE;
                    };
        }

    ELSE {IF (frontNum + 1 > = parms.startPage AND pageParms.plex = duplex)
            THEN {pnDelta ← LAST[LONG CARDINAL] - LONG[(frontNum + 1)] +
                LONG[parms.startPage];
                IF (pnDelta < parms.startNum)
                THEN ERROR Error
[[pageNumberTooLarge[tooBigByThisAmount:
                                    (CARDINAL[parms.startNum-pnDelta])]]];

                    pn ← [normal[num: LONG[frontNum + 1] -
LONG[parms.startPage] +
                                    parms.startNum,
                            pos: posBack]];

                    valid ← TRUE;
                    };
        };
    }; « GetStdBox »


END...
```

Title:      PAGE NUMBER GENERATION AND FORMATTING IN ELECTRONIC
            REPROGRAPHIC/PRINTING PRODUCTS


Appendix:  C:   PAGENUMUTILITY.MESA

## PAGENUMUTILITY.MESA

-- Copyright (C) 1988, 1989, 1990 by Xerox Corporation. All rights reserved.

```
DIRECTORY
  JobBackUp USING [LockID],
  Page USING [Handle],
  PageNumTypes USING [PageNumParmsPtr, SelectPageNum],
  PublicPrinting USING [MediumDimensions, Plex];

PageNumUtility: DEFINITIONS =
  BEGIN

  -- TYPES --

  -- Page numbering direction: back to front or front to back.
  Direction: TYPE = {nToOne, oneToN};

  -- Type set up to handle restarts.
  PageNum: TYPE = RECORD [
    parms: PageNumTypes.SelectPageNum,
    sideNo: CARDINAL];

  -- Used to report errors
  Problem: TYPE = RECORD [
   var: SELECT type: ProblemType FROM

      fatalError = > [code: CARDINAL,
                          subCode: CARDINAL],

      fontProblem = > [name: LONG STRING,
                         faulted: BOOLEAN],
                         -- TRUE : = fontFaulted; FALSE : = fontNotFound

      pageNumberTooLarge = > [tooBigByThisAmount: CARDINAL],

      -- appearance warning 162.
      -- The start Page for page numbering is beyond the end of the job.
      -- Client should process this warning and then RESUME.
      startPageBeyondEndPage = > [startPage: CARDINAL,
                                      endPage: CARDINAL,
                               pagesInJob: CARDINAL],

      spare = > [name: LONG STRING,
             data: LONG DESCRIPTOR FOR ARRAY CARDINAL OF CARDINAL],
      ENDCASE];

  -- Used to report errors
  ProblemType: TYPE = {fatalError, fontProblem, pageNumberTooLarge,
                     startPageBeyondEndPage, spare};

  -- Opaque type for record of instance data for sequential calls
  SeqInstance: TYPE;
```

```
SeqInstancePtr: TYPE = LONG POINTER TO SeqInstance ← NIL;

-- SIGNALS --

Error: SIGNAL [problem: Problem];

-- CONSTANTS --

defaultPageNum: PageNum = [parms: [none[]], sideNo: 0];

-- PROCEDURES --

-- Call to set up instance data for sequential page numbering.
--
-- direction - sets N -> 1 or 1 -> N numbering.
-- lockID - used to get instance data from data base.
-- jobParmsPtr - points to the JOB LEVEL page numbering parms.
--
-- RETURNS: pointer to the instance data.
--
-- ERRORS: fatalError, fontProblem, pageNumberTooLarge.
--
SeqInit: PROCEDURE [direction: Direction,
  jobParms: PageNumTypes.PageNumParmsPtr, lockID: JobBackUp.LockID]
  RETURNS [seqInstancePtr: SeqInstancePtr];

-- Call to get a set of page numbers for the current page.
--
-- headToToe - page boolean, if TRUE, adjusts page number accordingly.
-- mediumDimensions - needed to position when outer = TRUE & presets are used.
-- plex - tells whether or not to number one or two sides of the page.
-- seqInstancePtr - points to the proper instance data set up by SeqInit[].
--
-- RETURNS: page number info to pass to IIPGen & sideNo to use with SeqRestart.
--
-- ERRORS: fatalError
--
SeqNumber: PROCEDURE [headToToe: BOOLEAN,
  mediumDimensions: PublicPrinting.MediumDimensions, plex: PublicPrinting.Plex,
  seqInstancePtr: SeqInstancePtr] RETURNS [back, front: PageNum];

-- Call to resynchronize if a previously numbered page is needed.
--
-- back, front - page number info from last completed sheet. When SeqNumber[]
--   is next called, it will give the numbers of the next sheet after the one
--   specified in this call.
-- seqInstancePtr - points to the proper instance data set up by SeqInit[].
-- restart - if TRUE, restarts from beginning of sequence.
--
-- ERRORS: fatalError
--
SeqRestart: PROCEDURE [back, front: PageNum, seqInstancePtr: SeqInstancePtr,
  restart: BOOLEAN ← FALSE];
```

```
-- Call to free the memory used by the instance data.
--
-- ERRORS: fatalError
--
SeqDestroy: PROCEDURE [seqInstancePtr: SeqInstancePtr];

-- Call to "random access" a page number
--
-- jobParmsPtr - points to the JOB LEVEL page numbering parms.
-- lockID - used to get relevant page data from the data base
-- page - handle used to get relevant page data from the data base
--
-- RETURNS: page number info for the front or both sides of the page as needed.
--
-- ERRORS: fatalError, fontProblem, pageNumberTooLarge,
startPageBeyondEndPage
--
UniqNumber: PROCEDURE [jobParmsPtr: PageNumTypes.PageNumParmsPtr,
  lockID: JobBackUp.LockID, page: Page.Handle]
  RETURNS [back: PageNumTypes.SelectPageNum, front:
PageNumTypes.SelectPageNum];

    END...
```

**Claims**

1.  A method for operating an electronic reprographic system comprising the steps of
        scanning a set of original documents which comprise a job to be printed;
        electronically storing in memory images of the scanned documents;
        converting the images to electronic pages for printing;
        inputting at least one print mode parameter to obtain printed pages printed in accordance with the print mode parameter and corresponding to the electronic pages; and
        selectively generating consecutive page numbers each in a predetermined position for selected electronic pages in response to said print mode parameter.

2.  A method for page numbering in an electronic reprographic system comprising the steps of:
        creating a set of electronic page images which comprises a job to be printed;
        storing the electronic page images in memory;
        selectively generating page numbers for the stored electronic page images;
        determining the location and orientation for the page numbers within corresponding electronic page images; and
        converting the electronic page images and page numbers to printed pages.

3.  A method as claimed in claim 1 or claim 2, wherein the page number generation step includes the step of skipping predetermined electronic pages in response to a print mode parameter specifying a location of the predetermined electronic pages.

4.  A method as claimed in any one of the preceding claims, further comprising a default step of locating a page number in the predetermined position in the absence of a print mode parameter specifying the predetermined position.

5.  A method as claimed in any one of the preceding claims, wherein the print mode includes a mirror image active mode and a mirror image inactive mode, the mirror image inactive mode locating page numbers in the same predetermined location for consecutive numbered printed pages, the mirror image active mode locating page numbers in predetermined mirror image location for consecutively numbered pages.

6. A method as claimed in any one of the preceding claims, wherein the print mode includes a top print mode and a bottom print mode for locating a page number adjacent a head and toe, respectively, of a printed page.

7. A method as claimed in any one of the preceding claims, wherein the print mode parameter is a bound page mode, and the predetermined position for page numbers is one of a first location adjacent a bound edge and a second location away from the bound edge.

8. A method as claimed in any one of the preceding claims, wherein the generation of page numbers begins with a preselected page number.

9. A method as claimed in any one of the preceding claims, including the step of selecting a position along an edge of the printed page for the page number location.

10. A method as claimed in any one of the preceding claims, including the step of specifying the plex of the printed pages, and wherein the page numbers are generated in preselected locations in response to the plex.

11. An electronic reprographic system comprising:
   means for scanning a set of original documents which comprise a job to be printed;
   means for electronically storing in memory images of the scanned documents;
   means for converting the images to electronic pages for printing;
   means for inputting at least one print mode parameter to obtain printed pages printed in accordance with the print mode parameter and corresponding to the electronic pages; and
   means for selectively generating consecutive page numbers each in a predetermined position for selected electronic pages in response to said print mode parameter.

FIG. 1

**SCANNER** _6_

**CONTROLLER** _7_

**PRINTER** _8_

PLATEN
_20_

CCD
_24_

AGC PWB

PROCESSOR
_25_

IMAGE INPUT CONTROL
_50_

COMP.
_51_

_72_

USER INTERFACE
_52_

SYSTEM CONTROL
_54_

_74_

IMAGE OUTPUT CONTROL
_60_

ROS
_87_

PAPER SUPPLY
_107_

IMAGE MANIPU-LATION
_58_

DISK
_56_

_90-1, -2, -3_

PRINT MODULE
_95_

FINISHER
_120_

**FIG. 2**

FIG. 3

FIG. 4

## FIG. 5A

54

SYSTEM MEMORY

61

MEMORY CONTROLLER

76

MEMORY BUS A — 72

To FIG 5B

70-9

70-1

70-10

DISPATCHER PROCESSOR BUS A — 88

SYSTEM PROCESSORS — 78

MEMORY BUS ARBITRATION LOGIC

BOOT DOWNLOAD CONTROL LOGIC

CHANNEL LOADER/ SCHEDULER PROCESSOR

ETHERNET PROCESSOR

89

DISPATCHER PROCESSOR BUS B

8

PRINTER

BOOT BUS PROCESSOR

MEMORY BUS ARBITRATION CONTROL LINES TO EACH CHANNEL PROCESSOR

BOOT CONTROL DATA LINES TO EACH CHANNEL PROCESSOR

BOOT BUS

MEMORY BUS B — 74

To FIG 5B

86

IMAGE GENERATOR PROCESSORS

IMAGE GENERATOR PROCESSORS — 86

70-7

70-8

EP 0 478 351 A2

## FIG. 5B

From FIG 5A

To FIG 5C

MEMORY BUS A — 72

70-2

70-3

LOW SPEED INPUT/OUTPUT PROCESSOR ↔ SHARED LOCAL RAM

IMAGE COMPRESSION PROCESSOR

SYSTEM PROCESSORS

DISK DRIVE CONTROLLER PROCESSOR

BOOT CONTROL & LSIO SERVICES PROCESSOR

BOOT BUS PROCESSOR

TAPE DRIVE CONTROLLER

SERIAL COMMUNICATIONS CONTROLLER

UI COMMUNICATIONS CONTROLLER

SCANNER

TOP DISK

51

82

90-1

6

80

BOOT BUS

From FIG 5A

MAINTENANCE PANEL

STREAMING TAPE DRIVE

1. PORTABLE PRINTER PORT
2. RS232 PORTS (RIC MODEM, TERMINAL, PERIPHERAL)

USER INTERFACE

52

EP 0 478 351 A2

# FIG. 5C

From
FIG
5B

MEMORY BUS A                                    72                    70-5

70

DISK DRIVE
CONTROLLER
PROCESSOR

PARAMETER
BLOCK
GENERATOR
PROCESSOR

82

BOTTOM
DISK

90-3

70-6                                                            70-4

IMAGE
MANIPULATION
PROCESSOR
MASTER

IMAGE
MANIPULATION
PROCESSOR
SLAVE

DISK DRIVE
CONTROLLER
PROCESSOR

PARAMETER
BLOCK
GENERATOR
PROCESSOR

58                                                              82

MIDDLE
DISK

90-2

**FIG. 6**

EP 0 478 351 A2

## JOB PROGRAM

**JOB: Standard**
**1**
**DEFAULT**

**PAGE LEVEL**

**COVERS**

**Job Types & Tickets**

*150*

*152*

**Job Scorecard**

*62*

**Job Identification**
1
DEFAULT

**Destination**
Print & Delete

**Quantity**
1

**Output**
Stacker Collated

**Page Numbering**
Off

*154*

| Job Ticket for: 1 | Account: DEFAULT | | Close |
|---|---|---|---|
| **Job Type: Standard** | **Page Level:** | **Page Level:** | **Covers: Off** |
| Job Level | Basic | Special | |
| Job Identification: 1 DEFAULT | Document Description: 8.5 x 11.0 Standard | Crop: Off | |
| Destination: Print & Delete | Paper Stock: 8.5 x 11.0 Standard White | Window: Off | |
| Quantity: 1 | Reduce / Enlarge: 100% | Image Shift: Off | |
| Output: Stacker Collated | Sides Imaged: 1→1 | Merge: Off | |
| Page Numbering: Off | Image Quality: Standard Sharpness On | Rotate: Off | |

**Restore Defaults**

**Interrupt**

**Printer Options**

**Stop Scan**

**Stop Print**

*160*

**Job Supplement**

*162*

**Start Scan**

# FIG. 7

FIG. 8

EP 0 478 351 A2

# FIG. 9

EP 0 478 351 A2

**JOB PROGRAM**

**JOB: Standard 1** | PAGE LEVEL | COVERS | Job Types & Tickets

**Job Ticket**

**Job Scorecard**

62

**Job Identification**
1
DEFAULT

**Destination**
Print & Delete

**Quantity**
1

**Output**
Stacker Collated

**Page Numbering**
Start Page: 1
Start Number: 1

**Page Numbering**
On

180

**Other**                    Close

Y
0 → X
**Current Page:**
8.5 x 11.0 Inches

X | Y
0.0 | 0.0
182 | 184

**Number Orientation**
Portrait          Landscape
A                 ◁

**Font Point Size**
10   186

**Start Page** 188   **Start Number** 189
1                    1

**Restore Defaults** 200   **Interrupt**   **Printer Options**   **Stop Scan**   **Stop Print**   **Job Supplement**   **Start Scan**

EP 0 478 351 A2

JOB PROGRAM

JOB: Standard 1

Job Ticket

PAGE LEVEL

COVERS

Job Types & Tickets

62

Job Scorecard

Page Numbering
On

Job Identification
1
DEFAULT

Destination
Print & Delete

Other

Quantity
1

Mirror Location
On

Output
Stacker Collated

Point Size

8 Point

10 Point

12 Point

Close

190

cape

Page Numbering
Start Page: 1
Start Number: 1

t Number
1

Restore Defaults

Interrupt

Printer Options

Stop Scan

Stop Print

Job Supplement

Start Scan

FIG. 10

*302*

INITIALIZE RESOURCES AND VALIDATE PARAMETERS — *300*

OK ? — NO — FAULT THE PRINT JOB — *304*

YES

SET-UP INFORMATION FOR PAGE — *306*

DETERMINE COARSE PAGE NUMBER LOCATION FOR FRONT — *308*

HEAD - TO - TOE PAGE ? — *309*

NO — DETERMINE COARSE PAGE NUMBER LOCATION FOR BACK — *310*

YES — *312*

DETERMINE COARSE PAGE NUMBER POSITION FOR BACK (USING 180° RELATIVELY ROTATED ORIENTATION)

SET PAGE NUMBER ORIENTATION — *314*

FINE ADJUSTMENT OF PAGE NUMBER LOCATION (LEFT/RIGHT/CENTER, TOP/BOTTOM/CENTER) BASED ON DIMENSIONS OF PAGE NUMBER IMAGE — *316*

ASSIGN PAGE NUMBERS OR SKIP IF PAGE IS A BLANK — *318*

DONE ? — *319*

NO

YES — FREE RESOURCES — *320*

*FIG. 11*

**FIG. 12**

*FIG. 13*

EP 0 478 351 A2

*FIG. 14*

EP 0 478 351 A2

**FIG. 15**

EP 0 478 351 A2

**BACK BOTTOM**

**HEAD**

**TOE** 122

*FIG. 16*

L

**FRONT TOP**

**HEAD**

**TOE** 123

**BACK BOTTOM**

HEAD

122

TOE

*FIG. 17*

L

**FRONT TOP**

HEAD

TOE

123

# FIG. 18

FIG. 19

EP 0 478 351 A2

FIG. 20

59

JOB PROGRAM

JOB: Signature 1

PAGE LEVEL

COVERS

Job Types & Tickets

Job Ticket

62

Job Scorecard

Job Identification
1
DEFAULT

Destination
Print & Delete

Quantity
1

Output
Top Tray Collated

Page Numbering
Start Page: 1
Start Number: 1

Page Numbering
On

Other

Close

Current Trim:

Inches

Y

0

X

X

Y

0.0

0.0

Font Point Size
10

Start Page
1

Start Number
1

Restore Defaults

Interrupt

Printer Options

Stop Scan

Stop Print

Job Supplement

Start Scan

FIG. 21

```
┌─────────────────────┐          ╱╲  502
│  INITIALIZE RESOURCES │         ╱   ╲         NO
│     AND VALIDATE      │───────▶│  OK  │──────────────┐
│     PARAMETERS        │         ╲  ? ╱               │
└─────────────────────┘          ╲  ╱               ▼
           500                     ╲╱          ┌──────────────┐  504
                                    │          │ FAULT THE    │
                                  YES          │ PRINT JOB    │
                                    │          └──────────────┘
                                    ▼
                          ┌─────────────────────┐
                          │  SET-UP SIGNATURE    │
                          │ INFORMATION FOR THE  │  506
                          │        PAGE          │
                          └─────────────────────┘
```

INITIALIZE RESOURCES AND VALIDATE PARAMETERS — 500

OK ? — 502

NO → FAULT THE PRINT JOB — 504

YES

SET-UP SIGNATURE INFORMATION FOR THE PAGE — 506

DETERMINE CORRECT PAGE NUMBER ORIENTATION (TAKE INTO ACCOUNT PAGE FOLDLINE) — 508

DETERMINE COARSE PAGE NUMBER LOCATION (TAKE INTO ACCOUNT TRIM SIZE AND SIGNATURE SHIFT) — 510

FINE ADJUSTMENT OF PAGE NUMBER LOCATION (LEFT / RIGHT / CENTER, TOP / BOTTOM / CENTER) BASED ON DIMENSIONS OF PAGE NUMBER IMAGE — 512

ASSIGN PAGE NUMBERS OR SKIP IF PAGE FRAME IS A BLANK ADDED BY THE SIGNATURIZATION PROCESS — 514

DONE ? — 516

NO

YES — 518

FREE RESOURCES

## FIG. 22

61

# FIG. 23

FRONT

HEAD

HEAD

600

TOE 2

TOE 7

BACK

HEAD

HEAD

TOE 8

TOE 1

600

# FIG. 24